# EUROPÄISCHE PATENTANMELDUNG

(11) **EP 4 789 997 A1**
(43) Veröffentlichungstag der Anmeldung: **12.08.2026**
(21) Anmeldenummer: 25179588.6
(22) Anmeldetag: 28.05.2025
(51) Int. Cl.: B65H 31/26, B65H 45/101

(54) **ANORDNUNG, MESSEINRICHTUNG UND MESSVERFAHREN ZUM BESTIMMEN DER POSITION EINER WIEDERHOLKOMPONENTE**

(71) Anmelder: Grob-Werke GmbH & Co. KG, 87719 Mindelheim (DE)
(72) Erfinder: Lorenz, Maximilian, 87766 Memmingerberg (DE); Hierl, Patrick, 87742 Dirlewang (DE); Glück, Moritz, 82398 Polling (DE)
(74) Vertreter: KASTEL Patentanwälte PartG mbB

(57) **Zusammenfassung**

Zur Qualitätsverbesserung bei geringerem apparativem Aufwand bei einer Stapelbildung aus Wiederholkomponenten im Rahmen der Herstellung von elektrischen Energiequellen schafft die Erfindung eine (Mess-)Anordnung (14) mit einem Messaufnehmer (32, 32b) für eine Messeinrichtung (34) zum Messen einer Position einer Wiederholkomponente (18) für die Erzeugung von Zellen einer elektrischen Energiequelle, wobei die Anordnung (14) einen flächig ausgebildeten Niederhalter (28) zum Niederhalten der Wiederholkomponente (18) aufweist, in dem der Messaufnehmer (32, 32b) angeordnet ist,
zum Senden eines Sendesignals (36) auf die Wiederholkomponente (18) und zum Empfangen eines Antwortsignals (38) ausgebildet ist, und
einen Schnittstellenbereich (46) zur Verbindung mit einer außerhalb des Niederhalters (28) ausgebildeten Sende- und/oder Empfangseinheit (48, 49) und/oder Auswerteeinheit (50) der Messeinrichtung (34) aufweist.

## Beschreibung

Die Erfindung betrifft eine Anordnung mit einem Messaufnehmer für eine Messeinrichtung zum Messen einer Position einer Wiederholkomponente für die Erzeugung von Zellen einer elektrischen Energiequelle, wie z.B. einer Batteriezelle, einer Brennstoffzelle oder eines Elektrolyseurs. Weiter betrifft die Erfindung eine Messeinrichtung zum Messen einer Position einer Wiederholkomponente für die Erzeugung von Zellen einer elektrischen Energiequelle mit einer solchen Anordnung. Weiter betrifft die Erfindung eine Stapelvorrichtung zum wechselweisen Stapeln einer ersten und zweiten Zellkomponente als Wiederholkomponenten zu einem Stapel für die Erzeugung von Zellen einer elektrischen Energiequelle, wobei die Stapelvorrichtung eine solche Anordnung oder eine solche Messeinrichtung umfasst. Schließlich betrifft die Erfindung ein Messverfahren zum Messen einer Position einer Wiederholkomponente für die Erzeugung von Zellen einer elektrischen Energiequelle sowie ein Computerprogramm mit Anweisungen für dessen Durchführung.

Zum technologischen Hintergrund wird auf folgende Literaturstellen Bezug genommen:
[1] WO 2023/072343
[2] EP 4 258 402 A1
[3] DE 10 2017 000 176 A1
[5] EP 4 002 533 B1
[6] KR 2023 0 101 730 A1
[1] und [2] betreffen ein Verfahren und eine Vorrichtung zur Herstellung z-gefalteter Zellstacks für Batteriezellen, wobei eine Separatorbahn z-förmig um wechselweise gestapelte erste und zweite Zellkomponenten umgeschlagen wird. Das Umschlagen erfolgt beim Zuführen der jeweiligen Zellkomponente mittels eines an einem jeweiligen Greifer mitbewegend angeordneten Umschlagelements. Dabei sind Niederhalter vorgesehen, um die jeweils abgelegte Wiederholkomponente niederzuhalten. Weitere Beispiele für Vorrichtungen und Verfahren zum Bilden von Stapeln durch Ablegen von Wiederholkomponenten sind in der [3] und [4] gezeigt. Dabei werden durch wechselweises Ablegen unterschiedlicher Wiederholkomponenten Stapel von Brennstoffzellen gebildet.

Bei der Erstellung von Stapeln für elektrische Energiespeicher, wie z.B. Batteriezellen, Brennstoffzellen oder dergleichen, werden Wiederholkomponenten aufeinandergestapelt. Eine korrekte Position der einzelnen Wiederholkomponenten in dem Stapel ist ein Qualitätsmerkmal, so dass es den Wunsch gibt, die Position der Wiederholkomponenten beim Stapeln zu überprüfen.

Beispielsweise werden zum Erstellen von Zellstacks für eine Batteriezelle einzelne Elektroden oder Monozellen gestapelt. Hierfür werden diese von ihrer Zufuhrposition auf Ihre Ablageposition gebracht. Da die Ablageposition ein Qualitätskriterium ist, sollte diese über ein Messsystem geprüft werden. Ein Beispiel für ein bekanntes Messsystem ist der [6] zu entnehmen.

Die Erfindung hat sich zur Aufgabe gestellt, die Messung von Positionen von Wiederholkomponenten bei der Erzeugung von Zellen für elektrische Energiespeicher zu verbessern.

Zum Lösen dieser Aufgabe schafft die Erfindung eine Anordnung nach Anspruch 1. Eine Messeinrichtung mit einer solchen Anordnung, eine Stapeleinrichtung mit einer solchen Anordnung oder Messeinrichtung, ein entsprechendes Messverfahren sowie ein Computerprogramm mit Anweisungen zu dessen Durchführung sind Gegenstand weiterer unabhängiger Ansprüche.

Vorteilhafte Ausgestaltungen sind Gegenstand der Unteransprüche.

Die Erfindung schafft gemäß einem Aspekt davon eine Anordnung mit einem Messaufnehmer für eine Messeinrichtung zum Messen einer Position einer Wiederholkomponente für die Erzeugung von Zellen einer elektrischen Energiequelle, wobei die Anordnung einen flächig ausgebildeten Niederhalter zum Niederhalten der Wiederholkomponente aufweist, in dem der Messaufnehmer angeordnet ist, wobei die Anordnung zum Senden eines Sendesignals auf die Wiederholkomponente und zum Empfangen eines Antwortsignals ausgebildet ist, und wobei die Anordnung dazu eingerichtet ist, mit einer außerhalb des Niederhalters ausgebildeten Sende- und/oder Empfangseinheit und/oder Auswerteeinheit der Messeinrichtung koppelbar bzw. verbindbar zu sein.

Insbesondere kann die Anordnung zur Kopplung mit der außerhalb des Niederhalters ausgebildeten Sende- und/oder Empfangseinheit und/oder Auswerteeinheit einen Schnittstellenbereich aufweisen. Dieser kann wenigstens eine physische Schnittstelle, wie bspw. Steckverbindungen oder dergleichen aufweisen. Alternativ kann die wenigstens eine Schnittstelle als eine funktionale Schnittstelle, wie bspw. eine Öffnung zur Durchführung von zumindest einem Leiter oder dergleichen, ausgebildet sein.

Bei einigen Ausführungsformen ist in einem Niederhalter ein Messaufnehmer für eine Messeinrichtung integriert, mit der sich eine positionsgenaue Ablage einer Wiederholkomponente verifizieren bzw. erfassen lässt. Die Positionsbestimmung dient bei einigen Ausführungsformen zur Bestimmung der Lage bzw. Ausrichtung von Wiederholkomponenten von Zellen und insbesondere zur Bestimmung der positionsgenauen Ablage von Wiederholkomponenten beim Bilden von Zellstapeln. Ausführungsformen der Erfindung finden zum Beispiel Anwendung in der Herstellung, insbesondere industriellen Großserienfertigung, von Batteriezellen, Brennstoffzellen oder Elektrolyseuren.

Es sind unterschiedliche Messaufnehmer mit unterschiedlichen Messprinzipien möglich. Bevorzugte Ausführungsformen nutzen irgendeine Art von Messaufnehmer, mit denen sich Grenzlinienausbildungen, wie Kanten, Ecken, Dickenänderungen oder Materialänderungen, an den Wiederholkomponenten erfassen lassen.

Bei einigen Ausführungsformen ist vorgesehen, dass der Messaufnehmer als Messaufnehmer für eine optische Messeinrichtung zum optischen Messen der Position einer Wiederholkomponente ausgebildet ist, wobei der Messaufnehmer zum Senden eines optischen Sendesignals auf die Wiederholkomponente und zum Empfangen eines aufgrund des optischen Sendesignals als optisches Reflexionssignal ausgebildeten Antwortsignals ausgebildet ist.

Bei einigen Ausführungsformen ist vorgesehen, dass der Messaufnehmer in den als Niederhaltefinger ausgebildeten Niederhalter eingebaut und/oder integriert ist.

Bei einigen Ausführungsformen ist vorgesehen, dass der Messaufnehmer eine Dicke aufweist, die gleich oder kleiner als eine Dicke des Niederhalters ist.

Bei einigen Ausführungsformen ist vorgesehen, dass der Messaufnehmer in oder an einem Bereich des Niederhalters angeordnet ist, dessen Dicke zwischen 1,5 mm und 0,3 mm, insbesondere weniger als 1,0 mm und mehr als 0,3 mm, weiter insbesondere 0,8 mm, beträgt.

Bei einigen Ausführungsformen ist vorgesehen, dass der Messaufnehmer zusammen mit dem Niederhalter mittels einer Relativbewegungseinrichtung relativ zu der zu messenden Wiederholkomponente, insbesondere linear in einer Niederhalterbewegungsrichtung, bewegbar ist. Alternativ ist es auch denkbar, dass eine Relativbewegungseinrichtung vorgesehen ist, die die zu messende Wiederholkomponente relativ zu dem Messaufnehmer bewegt.

Bei einigen Ausführungsformen ist vorgesehen, dass der Messaufnehmer wenigstens eine Sensorleitung zum Leiten des Sendesignals und/oder Antwortsignals aufweist.

Bei einigen Ausführungsformen ist vorgesehen, dass der Messaufnehmer eine erste Sensorleitung zum Leiten des Sendesignals und eine zweite Sensorleitung zum Leiten des Antwortsignals aufweist.

Bei einigen Ausführungsformen ist der wenigstens eine Messaufnehmer als ein optischer Messaufnehmer ausgebildet. Bei einigen Ausführungsformen ist der wenigstens eine Messaufnehmer als ein kapazitiver Messaufnehmer ausgebildet. Bei einigen Ausführungsformen sind mehrere Messaufnehmer vorgesehen. Davon ist wenigstens einer in den Niederhalter integriert. Bei einigen Ausführungsformen sind mehrere Niederhalter mit integriertem Messaufnehmer vorgesehen. Die mehreren Messaufnehmer können alle optische Messaufnehmer oder alle kapazitive Messaufnehmer sein. Bei einigen Ausführungsformen ist einer oder eine Untergruppe der Messaufnehmer als optischer Messaufnehmer ausgebildet, während wenigstens ein anderer Messaufnehmer nach einem anderen Prinzip, beispielsweise kapazitiv arbeitet.

Bei einigen Ausführungsformen weist der wenigstens eine optische Messaufnehmer wenigstens eine Sensorleitung auf. Bei einigen Ausführungsformen weist der wenigstens eine optische Messaufnehmer einen Lichtwellenleiter auf. Bei einigen Ausführungsformen ist der wenigstens eine optische Messaufnehmer als ein Lichtwellenleiter ausgebildet.

Bei einigen Ausführungsformen ist vorgesehen, dass der Lichtwellenleiter in den Niederhalter eingebaut ist.

Bei einigen Ausführungsformen ist vorgesehen, dass der Lichtwellenleiter eine Faser, beispielsweise eine Glasfaser, insbesondere eine Faser als Sensorleitung, aufweist, die zum Aussenden des Sendesignals und zur Aufnahme des Antwortsignals ausgebildet ist.

Bei einigen Ausführungsformen ist vorgesehen, dass der Lichtwellenleiter eine erste Faser zum Leiten des Sendesignals aufweist.

Bei einigen Ausführungsformen ist vorgesehen, dass der Lichtwellenleiter eine zweite Faser zum Leiten des Reflexionssignals aufweist.

Bei einigen Ausführungsformen ist vorgesehen, dass die erste Faser an einer ersten Außenkontur des Niederhalters entlang einer ersten Längskante geführt ist und die zweite Faser an einer zweiten Außenkontur des Niederhalters entlang einer zweiten Längskante geführt ist.

Bei einigen Ausführungsformen ist vorgesehen, dass die zumindest eine Faser mittig, insbesondere entlang einer Längsachse des Niederhalters, angeordnet ist. "Mittig" bedeutet hier nicht zwingend genau in der Mitte liegend, sondern einfach nur "nicht an der Außenkontur liegend".

Bei einigen Ausführungsformen ist vorgesehen, dass die jeweilige Faser mit einem derartigen Verlauf und einer derartigen Krümmung in dem Niederhalter eingebaut ist, dass ein Aussenden und/oder ein Empfangen orthogonal oder unter einem schrägen Winkel zur Oberfläche der Wiederholkomponente und/oder zur zum Auflegen auf die Wiederholkomponente bestimmten Erfassungsoberfläche des Niederhalters ermöglicht ist.

Bei einigen Ausführungsformen ist vorgesehen, dass die jeweilige Faser in den Niederhalter eingeklebt ist.

Bei einigen Ausführungsformen ist vorgesehen, dass die jeweilige Faser von blickdichtem Material und/oder dem Material des Niederhalters ummantelt oder umgeben ist.

Gemäß einem weiteren Aspekt schafft die Erfindung eine Messeinrichtung zum Messen einer Position einer Wiederholkomponente für die Erzeugung von Zellen einer elektrischen Energiequelle, umfassend wenigstens eine Anordnung nach einer der voranstehenden Ausgestaltungen sowie eine Sendeeinheit zum Senden des Sendesignals und eine Empfangseinheit zum Empfangen des Antwortsignals und eine Auswerteeinheit.

Bei einigen Ausführungsformen ist die Auswerteeinheit dazu ausgebildet, die Position einer Grenzlinienausbildung der zu messenden Wiederholkomponente zu ermitteln.

Unter Grenzlinienausbildung ist die Ausbildung einer oder mehrerer Grenzlinien an der Wiederholkomponente zu verstehen. Grenzlinien können zum Beispiel Kanten, Dickenänderungen, Übergangslinien zwischen unterschiedlichen Materialien usw. sein. Unter Grenzlinienausbildungen fallen daher insbesondere folgende geometrischen Merkmale:
- eine Kante, die sowohl eine Außenkante der Wiederholkomponente als auch die Kante eines Feldes der Wiederholkomponente, z.B. einer Beschichtung auf einer Trägerfolie, sein kann;
- eine Ecke, die analog zur Kante eine Außenecke der Wiederholkomponente als auch die Ecke eines Materialfeldes, z.B. der Beschichtung auf der Trägerfolie, sein kann;
- Materialänderungen, wie beispielsweise eine Dickenänderung oder gegebenenfalls auch ein Materialwechsel.

Eine Dickenänderung kann z.B. über Kontrasterkennung optisch oder insbesondere über den Abstand zwischen der Wiederholkomponente und der Anordnung zum Messen gemessen werden. Ein Materialwechsel kann z.B. über Kontrasterkennung optisch oder über kapazitive Änderungen erfasst werden.

Bei einigen Ausführungsformen ist die Auswerteeinheit dazu ausgebildet, die Position der Grenzlinienausbildung der zu messenden Wiederholkomponente aus dem Antwortsignal sowie einem Messaufnehmerpositionssignal, welches eine Position des in dem Niederhalter vorgesehenen Messaufnehmers angibt, zu ermitteln.

Bei einigen Ausführungsformen ist die Auswerteeinheit dazu ausgebildet, die Position der Grenzlinienausbildung der zu messenden Wiederholkomponente aus einem Vergleich von wenigstens zwei Antwortsignalen, die an Stellen aufgenommen worden sind, die in Erstreckungsrichtung der Kante gesehen einen unterschiedlichen Abstand zu einer vorbestimmten Referenzposition der zu messenden Wiederholkomponente haben, zu ermitteln.

Bei einigen Ausführungsformen ist die Auswerteeinheit dazu ausgebildet, die Position der Grenzlinienausbildung der zu messenden Wiederholkomponente aus einem Vergleich des Antwortsignals mit einer vorbestimmten Kurve, die ein Verhältnis des Antwortsignals zu einem Grad einer Überdeckung einer an die Grenzlinienausbildung angrenzenden Fläche mit einem Messpunkt oder Messbereich angibt, in den das Sendesignal eingeleitet wird (z.B. ist der Messpunkt oder Messbereich der Bereich, der mit dem Sendesignal wie z.B. Licht bestrahlt wird), zu ermitteln.

Bei einigen Ausführungsformen ist die Auswerteeinheit dazu ausgebildet, als Grenzlinienausbildung eine oder mehrere der folgenden Linienausbildungen zu ermitteln:
- eine Kante der Wiederholkomponente,
- eine Außenkante der Wiederholkomponente,
- eine an einem Materialübergang ausgebildete Kante der Wiederholkomponente,
- eine Kante einer Beschichtung der Wiederholkomponente,
- eine durch eine Dickenänderung der Wiederholkomponente ausgebildete Linie,
- eine durch eine Materialänderung an der Wiederholkomponente ausgebildete Linie,
- eine Ecke der Wiederholkomponente,
- eine Außenecke der Wiederholkomponente,
- eine an einem Materialübergang ausgebildete Ecke der Wiederholkomponente,
- eine Ecke einer Beschichtung der Wiederholkomponente,
- eine durch eine Dickenänderung der Wiederholkomponente ausgebildete Ecke und
- eine durch eine Materialänderung an der Wiederholkomponente ausgebildete Ecke.

Bei einigen Ausführungsformen ist ein weiterer Messaufnehmer zum Messen der Position einer weiteren Grenzlinienausbildung der Wiederholkomponente an einer Einheit vorgesehen, die sich im bestimmungsgemäßen Gebrauch mit wenigstens einer Richtungskomponente quer zu einer Niederhalterbewegungsrichtung bewegt, mit der sich im bestimmungsgemäßen Gebrauch der Niederhalter relativ zu der zu messenden Wiederholkomponente bewegt. Die Auswerteeinheit ist bei diesen Ausführungsformen dazu eingerichtet, die Position einer ersten Grenzlinienausbildung beim Überfahren der ersten Grenzlinienausbildung in Niederhalterbewegungsrichtung mittels des in dem Niederhalter angeordneten Messaufnehmers zu ermitteln und die Position der weiteren Grenzlinienausbildung aufgrund eines Signals des weiteren Messaufnehmers und eines Positionssignals der Einheit zu ermitteln.

Bei einigen Ausführungsformen ist ein zweiter Messaufnehmer in dem Niederhalter der Anordnung nach einer der oben erläuterten Ausgestaltungen mit Abstand zu dem ersten Messaufnehmer vorgesehen, wobei die Messeinrichtung dazu eingerichtet ist, die Position einer ersten Grenzlinienausbildung beim Überfahren der ersten Grenzlinienausbildung mit dem ersten Messaufnehmer zu ermitteln und die Position einer zweiten Grenzlinienausbildung der zu messenden Wiederholkomponente mit dem zweiten Messaufnehmer aus dem Vergleich der an den unterschiedlich zu der vorbestimmten Referenzposition angeordneten Stellen entlang der zweiten Grenzlinienausbildung aufgenommenen Antwortsignale zu ermitteln.

Bei einigen Ausführungsformen ist die Messeinrichtung eine optische Messeinrichtung zum optischen Messen der Position der Wiederholkomponente oder eine kapazitive Messeinrichtung zum kapazitiven Messen der Position der Wiederholkomponente.

Bei einigen Ausführungsformen ist die Messeinrichtung dazu eingerichtet, mit mehreren der Messaufnehmer eine Lage der Wiederholkomponente zu erfassen.

Bei einigen Ausführungsformen weist die Messeinrichtung mehrere der Messaufnehmer an unterschiedlichen Stellen auf und ist dazu eingerichtet, durch Messung mithilfe der mehreren Messaufnehmer Positionen von mehreren beabstandeten Punkten/Grenzlinien der Wiederholkomponente und damit die Lage und/oder die Ausmaße der Wiederholkomponente zu erfassen.

Gemäß einem weiteren Aspekt schafft die Erfindung eine Stapelvorrichtung zum wechselweisen Stapeln einer ersten und zweiten Zellkomponente als Wiederholkomponenten zu einem Stapel für die Erzeugung von Zellen einer elektrischen Energiequelle, wobei die Stapelvorrichtung eine Stapelaufnahme, eine Zellkomponentenzuführeinrichtung zum Zuführen der ersten und zweiten Zellkomponente zu der Stapelaufnahme, um dort den Stapel zu bilden, und eine Niederhalteeinrichtung zum Niederhalten der Wiederholkomponenten aufweist, wobei die Niederhalteeinrichtung einen flächig ausgebildeten Niederhalter zum Niederhalten einer auf dem Stapel oder der Stapelaufnahme abgelegten Wiederholkomponente und eine Relativbewegungseinrichtung zum relativen Bewegen des Niederhalters und der Stapelaufnahme aufweist, wobei der Niederhalter der Niederhalter der Anordnung nach einer der voranstehend erläuterten Ausgestaltungen mit dem Messaufnehmer ist und/oder wobei die Stapelvorrichtung eine Messeinrichtung nach einer der voranstehenden Ausgestaltungen aufweist.

Ausführungsformen der Stapelvorrichtung weisen somit eine Anordnung gemäß einer der erfindungsgemäßen Ausführungsformen mit Niederhalter, in dem wenigstens ein Messaufnehmer vorgesehen ist, auf.

Bei einigen Ausführungsformen ist vorgesehen, dass die Relativbewegungseinrichtung zum relativen Bewegen des Niederhalters zu der Stapelaufnahme in einer sich quer zu einer ersten Grenzlinie der abgelegten Wiederholkomponente verlaufenden Niederhalterbewegungsrichtung ausgebildet ist.

Bei einigen Ausführungsformen ist eine Separatorbahnzufügeeinrichtung zum z-förmigen oder mäanderförmigen Einfügen einer Separatorbahn zwischen den Zellkomponenten derart vorgesehen, dass die Separatorbahn wechselweise auf einer ersten Seite um eine vorhergehend platzierte Zellkomponente umgeschlagen ist und dann auf einer der ersten Seite gegenüberliegenden zweiten Seite um eine nachfolgend platzierte Zellkomponente umgeschlagen ist. Die Separatorbahnzufügeeinrichtung kann auch als Separatorbahnzuführeinrichtung bezeichnet werden.

Bei einigen Ausführungsformen ist vorgesehen, dass die Separatorbahnzufügeeinrichtung eine Verfahreinheit und eine weitere Relativbewegungseinrichtung zum relativen Bewegen der Verfahreinheit relativ zu der Stapelaufnahme in einer Verfahreinheitbewegungsrichtung aufweist, die quer zu der Niederhalterbewegungsrichtung verläuft, wobei an der Verfahreinheit zumindest ein weiterer Messaufnehmer zum Messen der Position einer weiteren Grenzlinie der abgelegten Wiederholkomponente vorgesehen ist.

Gemäß einem weiteren Aspekt schafft die Erfindung ein Messverfahren zum Messen einer Position einer Wiederholkomponente für die Erzeugung von Zellen einer elektrischen Energiequelle, umfassend:
a) Bereitstellen einer Anordnung nach einer der voranstehenden Ausgestaltungen, einer Messeinrichtung nach einer der voranstehenden Ausgestaltungen oder einer Stapelvorrichtung nach einer der voranstehenden Ausgestaltungen,
b) relatives Bewegen des mit dem Messaufnehmer versehenen Niederhalters und der Wiederholkomponente in einer sich mit zumindest einer Richtungskomponente quer zu einer ersten Grenzlinie der Wiederholkomponente erstreckenden Niederhalterbewegungsrichtung;
c) Senden des Sendesignals mittels des Messaufnehmers während der Relativbewegung von Schritt b);
d) Empfangen eines Antwortsignals mittels des Messaufnehmers während der Relativbewegung von Schritt b); und
e) Bestimmen der Position einer die erste Grenzlinie umfassenden ersten Grenzlinienausbildung der Wiederholkomponente mit den Schritten:
   e1) Erfassen der Position des Niederhalters in Niederhalterbewegungsrichtung beim Erfassen einer Änderung des Antwortsignals; und
   e2) Bestimmen der Position der ersten Grenzlinienausbildung aus der in Schritt e1) erfassten Position des Niederhalters;
   und/oder
f) Bestimmen der Position einer sich quer zu der ersten Grenzlinie erstreckenden zweiten Grenzlinie der Wiederholkomponente mit den Schritten:
   f1) Durchführen von Schritt b) derart, dass ein Messpunkt des Messaufnehmers entlang einer Soll-Lage der zweiten Grenzlinie verfahren wird; und
   f2) Erfassen des Antwortsignals an wenigstens zwei in unterschiedlichen Abständen zu einer vorbestimmten Referenzposition zwischen der ersten und zweiten Grenzlinie liegenden Stellen im Verlauf der Bewegung von Schritt f1) und Ermitteln der Ist-Lage der zweiten Grenzlinie anhand eines durch Vergleich der Antwortsignale ermittelten Überdeckungsgrades, mit dem der Messpunkt die zweite Grenzlinie überdeckt, oder
   f3) Erfassen des Antwortsignals und Ermitteln der Ist-Lage der zweiten Grenzlinie anhand eines Vergleichs des Antwortsignals mit einer vorbestimmten Kurve, die die Beziehung des Antwortsignals zu einem Überdeckungsgrad angibt, mit dem der Messpunkt eine an die zweite Grenzlinie anschließende Oberfläche der Wiederholkomponente überdeckt.

Hierbei ist zu beachten, dass die Nummerierung der Schritte lediglich zur Unterteilung des Verfahrens in einzelne Schritte dient, jedoch keine feste Reihenfolge vorgibt. Mit anderen Worten kann man sagen, dass die Schritte nicht zwingend gemäß ihrer Nummerierung durchgeführt werden müssen, sondern in ihrer Reihenfolge beliebig getauscht werden können.

Einige Ausführungsformen des Messverfahrens in der Alternative mit Schritt e) umfassen den Schritt:
g) Bestimmen der Position der sich quer zu der ersten Grenzlinie erstreckenden zweiten Grenzlinie der zu messenden Wiederholkomponente mit den Schritten:
g1) Vorsehen eines weiteren Messaufnehmers zur Grenzlinienabtastung an einer Einheit, die quer zur Niederhalterbewegungsrichtung über die zu messende Wiederholkomponente verfahren wird, und
g2) Erfassen der Position der zweiten Grenzlinie aus einem eine Grenzlinienerfassung anzeigenden Messsignal des weiteren Messaufnehmers und einer zum Zeitpunkt der Grenzlinienerfassung erfassten Position der Einheit.

Dabei kann die Grenzlinienabtastung auch statisch durchgeführt werden. Das bedeutet, dass der Messaufnehmer sowohl mit einer kontinuierlichen Bewegung als auch mit einer diskreten Bewegung über die zu messende Wiederholkomponente verfahren werden. Bei der kontinuierlichen Bewegung des Messaufnehmers wird die Grenzlinienabtastung insbesondere in der Bewegung, sozusagen "on-the-fly" durchgeführt, während die Grenzlinienabtastung bei der diskreten Bewegung des Messaufnehmers insbesondere im Stillstand (Punkt für Punkt) durchgeführt wird.

Zusätzlich ist zu beachten, dass anstelle den Messaufnehmer relativ zu zu messenden Wiederholkomponente zu verfahren, die zu messende Wiederholkomponente relativ zum Messaufnehmer verfahren werden kann.

Bei einigen Ausführungsformen umfasst Schritt g1) den Schritt:
g1.1) Vorsehen des weiteren Messaufnehmers an einer Verfahreinheit einer Separatorbahnzufügeeinrichtung zum z-förmigen oder mäanderförmigen Einfügen einer Separatorbahn zwischen den Wiederholkomponenten.

Einige Ausführungsführungsformen des Messverfahrens umfassen den Schritt:
Erfassen einer Lage der Wiederholkomponente mit mehreren Messaufnehmern.

Einige Ausführungsführungsformen des Messverfahrens umfassen den Schritt:
Bereitstellen mehrerer der Messaufnehmer an unterschiedlichen Stellen und Erfassen von Positionen von mehreren voneinander beabstandeten vordefinierten Punkten oder Grenzlinien der Wiederholkomponente durch Messung mithilfe der mehreren Messaufnehmer, um so die Lage der Wiederholkomponente zu erfassen.

Bei einigen Ausführungsformen umfasst die Messeinrichtung oder die Stapelvorrichtung eine computerimplementierte Steuerung, die dazu eingerichtet ist, die Messeinrichtung oder die Stapelvorrichtung zum Durchführen des Messverfahrens nach einer der voranstehenden Ausgestaltungen zu veranlassen.

Gemäß einem weiteren Aspekt schafft die Erfindung ein Computerprogramm umfassend Anweisungen, die die Messeinrichtung oder die Stapelvorrichtung nach einer der voranstehenden Ausgestaltungen veranlassen, das Messverfahren nach einer dessen voranstehend beschriebenen Ausgestaltungen durchzuführen.

Die Anordnungen, Messeinrichtungen, Stapelvorrichtungen und Messverfahren gemäß Ausführungsformen der Erfindung eignen sich zur Verwendung bei der Herstellung verschiedener elektrischer Energiespeicher, die Stapel von Wiederholkomponenten umfassen. Einige besondere Vorteile und Effekte werden im Folgenden anhand eines konkreten Anwendungsbeispiels der Herstellung von Batteriezellen durch Z-Falten beschrieben. Die Prinzipien der Erfindung sind aber natürlich auch auf jedes weitere Stapeln anwendbar, bei dem ein Niederhalter zum Niederhalten von Wiederholkomponenten einsetzbar ist.

Einige Ausführungsformen der Erfindung betreffen einen Niederhalter mit integrierter Sensorik für Stapelprozesse, insbesondere in der Batteriefertigung.

Zum Erstellen von Zellstacks für eine Batteriezelle werden einzelne Elektroden oder Monozellen gestapelt. Hierfür werden diese von ihrer Zufuhrposition auf Ihre Ablageposition gebracht. Da die Ablageposition ein Qualitätskriterium ist, soll diese über ein Messsystem geprüft werden.

Eine Methode, die Zellstacks erstellt, ist das sogenannte Z-Falten, siehe [1] und [2]. Es sind mehrere Zufuhrpositionen, beispielsweise zwei, jeweils eine für Anode und Kathode vorhanden, die auf eine zentrale Ablageposition ablegen. Die Ablageposition ist mit einer beweglichen Einheit ausgestattet, welche die gezielte Ablage der Separator-Folie steuert, die zwischen Anode und Kathode eingebracht werden muss. Durch den Stapelprozess entstehen lose aufeinander abgelegte Schichten. Allerdings ist eine Positionsgenauigkeit für funktionsfähige Zellen gefordert, daher werden die Anoden/Kathoden nach ihrer Ablage durch bewegliche Niederhalter in ihrer Position fixiert. Diese Niederhalter weisen, da sie zwischen den einzelnen Schichten ausgefahren werden und auch als Umschlagkante für den Separator dienen, eine angepasste Geometrie mit geringer Dicke (z.B. unter einem Millimeter) auf.

Die Ablageposition wird bei einem Vergleichsbeispiel zusätzlich durch ein Messsystem überprüft. Für die geforderten Toleranzen eignen sich vor allem durch externe, optische Messsysteme. Allerdings weisen diese die Schwierigkeit auf, dass - durch die Führung der Separator-Folie und die Niederhalterfinger - der direkte orthogonale Pfad häufig mit Störkonturen durchsetzt ist und daher nicht genutzt werden kann.

In Vergleichsbeispielen wird dies z.B. durch angestellte Beleuchtungen/Kameraeinheiten umgangen. Durch die Winkel, die durch die bewegliche Einheit und der Umschlagkante des Niederhalters entstehen, eignet sich hierfür nur ein kleiner Winkelbereich. Trotz dieser Anpassung wird nur ein kleiner Bereich der Elektrodenkanten abgebildet. Daher werden in Vergleichsbeispielen zusätzliche Freimachungen in den Niederhalter eingebracht, um eine Antastposition zu gewährleisten, also eine Position bzw. ein Bereich, an dem das darunterliegende Material freiliegt, und somit eine Kantendetektion in diesem Bereich möglich ist. Falls diese Technik für einen Formatwechsel vorbereitet werden soll, benötigt man anpassbare Kamera- und Beleuchtungsbefestigungen. Durch den gewählten Aufbau ist dies nicht ohne weiteres möglich, da die Linearachsen, die die Elektroden zuführen, eine große Störkontur liefern.

Zudem sind die Freimachungen in den Niederhaltern, wenn Sie die Umschlagskante beeinflussen, von großem Nachteil für den Umschlagprozess des Separators, da dadurch Falten entstehen und in den Zellstapel eingebracht werden können.

Eine konkrete Ausgestaltung einer solchen Lösung mit den Nachteilen gemäß den vorgenannten Vergleichsbeispielen ist in der Literaturstelle [6] offenbart.

Eine weitere Möglichkeit wäre, die Kamera orthogonal zur Ablagefläche zu positionieren. Dabei ist die Kamera so ausgeführt, dass ein sehr großes Sichtfeld gewählt wird. Die eigentliche Messfläche befindet sich in einem geringen Bruchteil der Messfläche. Diese Möglichkeit wird derzeit nicht als sinnvoll angesehen, da sie mehrere Nachteile besitzt:
- Hohe Anforderungen an die Abbildungsgenauigkeit aufgrund von großem Sichtfeld in Relation zu kleiner Messfläche
- Positionierungseinheit oder Verfahreinheit der Separator-Folie (Vorrichtung, die die Separator-Folie "oben" immer von hin- und herbewegt, um das Z-artige Legen des Separators zu realisieren) muss weiter ausfahren, um nicht im Sichtfeld der Kamera zu sein, dies führt zu geringerer Taktzeit wegen der längeren Verfahrwege
- Aufbau der ganzen Anlagenstruktur wird weniger kompakt

Einige Nachteile/Herausforderungen bisheriger Techniken sind:
- Starke Störkontur zur optischen Messeinrichtung durch Prozessbauteile und Prozessparameter; limitierend sind insbesondere die Niederhalter, die Separator-Folie, die Verfahreinheit der Separator-Folie sowie die Geschwindigkeit
- Es ist eine geringe Dicke des Niederhalters (weniger als 1 mm) wünschenswert, um einen i.O.-Prozess (i.O. = in Ordnung) zu gewährleisten; Ausnehmungen in den Niederhaltern würden die mechanische Stabilität in Frage stellen
- Formatwechsel - z.B. eine Änderung der Elektrodenabmessungen - benötigen einen Umbau und können nicht ohne weiteres automatisiert geschehen
- Reflexionen der Separator-Folie können den Prozess beeinflussen (Reflexionen, z.B. aufgrund von Wellen- u/o Faltenbildung)
- Eine Beschichtung der Niederhaltefinger - die oft erforderlich ist, um die Faltenbildung am Separator zu verringern - weist nicht die besten optischen Eigenschaften auf; mit Kamerakonzept ist ein Referenzobjekt im Sichtfeld der Kamera vorzusehen, das auf dem Niederhaltefinger aufgebracht ist. Damit das Referenzobjekt erkannt wird, sollte in dem Bereich der Referenzobjekts die Beschichtung des Niederhaltfingers wieder entfernt werden
- Eine Mitfahrende Sensorik an der Positionierungseinheit des Separators ist schwierig umzusetzen. Um die Taktzeit zu erreichen, wird in der Regel die Masse der Positioniereinheit auf ein Mindestmaß reduziert.
- Ausbrüche in den Niederhaltern verringern die Steifigkeit der Niederhalter bzw. können im ungünstigsten Fall auch Falten im Separator erzeugen

Gemäß einigen Ausführungsformen der Erfindung wird ein Messsystem geschaffen, bei dem zumindest ein Sensor oder Sensorkopf zur Erfassung von Grenzlinienausbildungen, beispielsweise ein Messaufnehmer zur Kantenantastung, also Kantenerfassung, in den beispielsweise als Niederhalterfinger ausgebildeten Niederhalter eingebaut ist.

Damit lassen sich die obigen Nachteile vermeiden oder zumindest verringern:
- Eine separate Anpassung des Messsystems an Elektrodenformat ist nicht mehr erforderlich, da der Niederhalter im Prozess ohnehin verwendet wird, und eine Anpassung des Messsystems automatisch durch die Anpassung des Niederhalters (oder eines Stapeltisches) erfolgt.
- die Störkonturproblematik wird umgangen, da ein direkter Messweg vorliegt.
- Störreflexionen (z.B. durch die Separator-Folie) beeinflussen die Messung nicht.
- Die Beschichtung des Niederhalters beeinflusst die Messung nicht.
- Es sind keine zusätzlichen Ausbrüche in den Niederhaltern notwendig, da keine Vergrößerung der Antastfläche/Detektionsfläche erforderlich ist

Vorteilhafte Ausgestaltungen der Erfindung bieten Lösungen für folgende Herausforderungen bei der Umsetzung praktischer Ausführungen:
Für den Prozess ist eine geringe Niederhalterdicke von weniger als 1,0 mm, insbesondere von gleich oder kleiner als 0,8 mm vorteilhaft, da hierdurch der Faltenwurf der Separator-Folie während des Stapelvorgangs minimiert wird. Eine Änderung der Niederhalter-Geometrie, insbesondere der Dicke des Niederhalters, ist daher nicht gewünscht. Daher wird gemäß einigen Ausführungsformen eine integrierte Messtechnik vorgeschlagen, die in diesen Bauraum passt.

Die Genauigkeit, mit der eine Kante angetastet werden soll, liegt bei einigen Ausführungsformen im Bereich von etwa 0,1 µm.

Der Arbeitsabstand der Messtechnik zur Messoberfläche beträgt bei einigen Ausführungsformen 2 - 4 mm.

Die Schaltgeschwindigkeit bzw. Reaktionsgeschwindigkeit der Messtechnik, also die Zeit, die vergeht, bis der Sensor der Messtechnik ein Signal auslöst, liegt innerhalb der Einschießzeit der Niederhalter.

Bei einigen Ausführungsformen wird der in einigen Prozessen verwendete Vorgang des Niederhaltens der Wiederholkomponenten, z.B. Elektroden, durch integrierte Messtechnik erweitert. Hierdurch entsteht eine platzsparende, effiziente Methode, um die Lage der Wiederholkomponenten, z.B. Elektrodensheets, zu bestimmen, welche unabhängig von Störkonturen und Formatwechseln ist. Weiterhin ist die Lösung kosteneffizienter.

Einige Vorteile bevorzugter Ausgestaltungen der Erfindung sind:
- Unabhängig vom Formatwechsel der Elektroden (keine Verstellung nötig) - früher musste die Kameraanpassungen separat von den Formatanpassungen am Stapeltisch durchgeführt werden und nachträglich kalibriert werden. Mit der Sensorik am Stapeltisch wird dieser zweite Vorgang vermieden.
- Geringe Störkontur - Es entfallen Halterungen für die Kamera, Kamera, Beleuchtung, Objektivaufbauen, weiter muss der Signalweg zur Bildaufnahme nicht freigehalten werden. Unter dem Signalweg zur Bildaufnahme ist der Bereich gemeint, der freigehalten werden musste, um mit der Kamera die Kanten erfassen zu können
- im Wesentlichen unabhängig des Messvorgangs von Störkonturen
- Kostengünstiger (Hardwarebetrachtung)

Ausführungsbeispiele der Erfindung werden im Folgenden anhand der beigefügten Zeichnungen näher erläutert. Darin zeigt:
- Fig. 1: eine schematische Vorderansicht eines Ausführungsbeispiels einer Stapelvorrichtung, wobei im oberen und unteren Teilbereich a) und b) der Fig. 1 unterschiedliche Stellungen während eines Stapelprozesses dargestellt sind;
- Fig. 2: eine Draufsicht auf die Stapelvorrichtung von Fig. 1;
- Fig. 3: eine Draufsicht auf die Stapelvorrichtung mit einer Wiederholkomponente zur Darstellung einer Bestimmung einer Ablageposition für die Wiederholkomponente;
- Fig. 4: eine weitere Draufsicht vergleichbar zu Fig. 3, wobei ein Schritt einer Verrechnung der Ablageposition auf die Mitte der Wiederholkomponente angedeutet ist;
- Fig. 5: eine perspektivische Ansicht einer (Mess-)Anordnung mit einem Niederhalter, der Teil der Stapelvorrichtung sein kann, und einem Messaufnehmer zur Bestimmung der Position der Wiederholkomponente in dem Niederhalter, wobei ein Schritt einer Positionsbestimmung in einer Richtung (Achse) dargestellt ist;
- Fig. 6: eine schematische Blockdarstellung einer Ausführungsform einer Messeinrichtung zur Positionsbestimmung, die zumindest eine Anordnung mit dem Niederhalter und dem Messaufnehmer aufweist;
- Fig. 7: eine Draufsicht auf die Stapelvorrichtung mit mehreren der Anordnungen - Kombination aus Niederhalter und Messaufnehmer -, wobei ein Schritt einer Positionsbestimmung in einer quer verlaufenden Richtung (andere Achse) dargestellt ist;
- Fig. 8: eine Vorderansicht der Stapelanordnung vergleichbar zu Fig. 1, wobei der Schritt der Positionsbestimmung in der anderen Achse mittels einer quer zu den Niederhaltern bewegbaren Einheit dargestellt ist;
- Fig. 9: eine Draufsicht auf eine Wiederholkomponente mit Messpunkten einer weiteren Ausführungsform der Anordnung - Kombination von Niederhalter und Messaufnehmer - zur Darstellung einer alternativen Möglichkeit der Positionsbestimmung in der anderen Achse mittels zweiten Messaufnehmers im Niederhalter und durch Überdeckung eines Messbeleuchtungsflecks;
- Fig. 10: einen Graphen, der für die Situation von Fig. 9 den Zusammenhang zwischen Überdeckung und Signal zeigt; und
- Fig. 11: eine perspektivische Ansicht der Anordnung und der Wiederholkomponente zur Darstellung der Positionsbestimmung in beiden Achsrichtungen durch zwei Lichtwellenleiter.

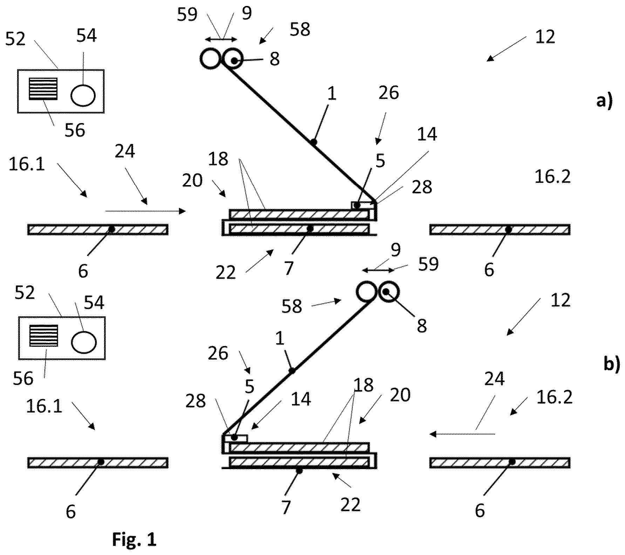

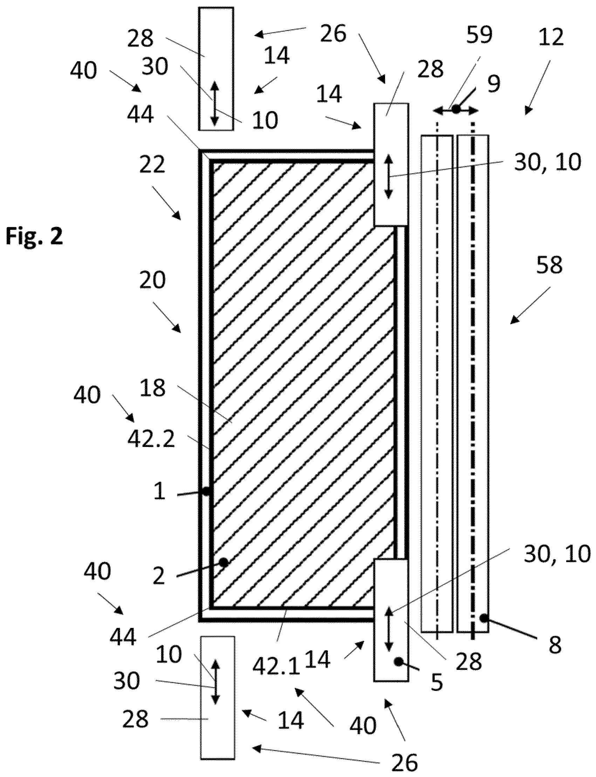

In den Fig. 1 und 2 ist ein Ausführungsbeispiel für eine Stapelvorrichtung 12 gezeigt, die eine (Mess-)Anordnung 14 zur Positionsbestimmung von zu stapelnden Wiederholkomponenten 18 aufweist.

Die Stapelvorrichtung 12 ist zum wechselweisen Stapeln einer ersten Zellkomponente 16.1 und einer zweiten Zellkomponente 16.2 als Wiederholkomponenten 18 zu einem Stapel 20 ausgebildet. Das Stapeln erfolgt im Rahmen der industriellen Großserien-Herstellung von Zellen einer elektrischen Energiequelle, wie z.B. einer Batteriezelle, einer Brennstoffzelle oder eines Elektrolyseurs.

Die Stapelvorrichtung 12 weist eine Stapelaufnahme 22, eine Zellkomponentenzuführeinrichtung 24 zum Zuführen der ersten und zweiten Zellkomponente 16.1, 16.2 zu der Stapelaufnahme 22, um dort den Stapel 20 zu bilden, und eine Niederhalteeinrichtung 26 zum Niederhalten der Wiederholkomponenten 18 auf.

Die Niederhalteeinrichtung 26 weist wenigstens einen flächig ausgebildeten Niederhalter 28 zum Niederhalten einer auf dem Stapel 20 oder der Stapelaufnahme 22 abgelegten Zellkomponente 16.1, 16.2 und eine Relativbewegungseinrichtung 30 zum relativen Bewegen des Niederhalters 28 und der Stapelaufnahme 24 auf. Mit "flächig ausgebildet" ist hierbei gemeint, dass der Niederhalter 28 eine Erstreckung in Dickenrichtung (z-Richtung) aufweist, die um wenigstens eine Größenordnung (wenigstens 10mal) kleiner ist als ihre Erstreckung in Längsrichtung und Breitenrichtung (x- und y-Richtung).

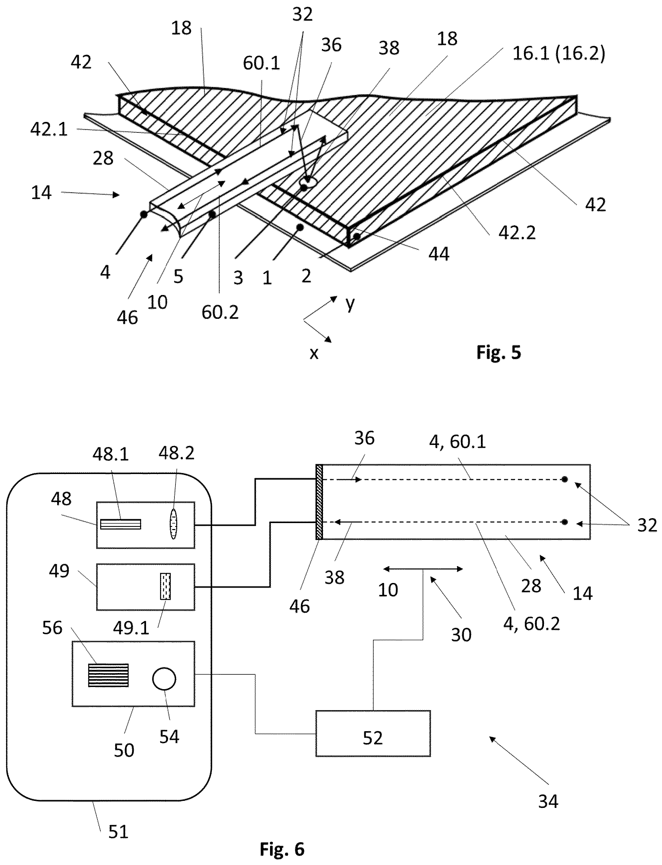

Die Anordnung 14, von der ein Ausführungsbeispiel in Fig. 5 dargestellt ist, weist den zum Beispiel als Niederhaltefinger 5 ausgebildeten Niederhalter 28 und einen Messaufnehmer 32 auf. Der Messaufnehmer 32 ist ein Messaufnehmer für eine Messeinrichtung 34 (Messsystem) zum Messen einer Position der Zellkomponente 16.1, 16.2 für die Erzeugung von Zellen der elektrischen Energiequelle. Ein Beispiel für die Messeinrichtung 34 ist in Fig. 6 schematisch dargestellt. Der Messaufnehmer 32 ist, wie in Fig. 5 und 6 dargestellt, in dem Niederhalter 28 angeordnet.

In den hier gezeigten Ausführungsformen ist die Relativbewegungseinrichtung 30 dazu eingerichtet, den wenigstens einen Niederhalter 28 relativ zur Stapelaufnahme 24 zu bewegen. Es ist jedoch auch denkbar, eine Relativbewegungseinrichtung vorzusehen, die die Stapelaufnahme 24 relativ zu dem wenigstens einen Niederhalter 28, insbesondere zu dem Messaufnehmer 32, bewegt.

Die Anordnung 14 ist zum Senden eines Sendesignals 36 auf die Wiederholkomponente 18 und zum Empfangen eines Antwortsignals 38 ausgebildet. Die Art der Signale 36, 38 kann unterschiedlich sein, solange durch das Sendesignal 36 und das Antwortsignal 38 geometrische Merkmale der Wiederholkomponente 18 erfasst werden, anhand derer sich die Position der Wiederholkomponente 18 bestimmen lässt. Insbesondere sollen Grenzlinienausbildungen 40 wie innere oder äußere Kanten 42 oder Ecken 44 oder Materialänderungen (zum Beispiel Kanten einer Beschichtung mit Aktivmaterial 2) der Wiederholkomponente 18 erfasst werden. Die Messung kann z.B. optisch oder kapazitiv oder auf andere Arten, die zur Erfassung derartiger Grenzlinienausbildungen 40, insbesondere beim Überfahren mit dem mit dem Messaufnehmer 30 versehenen Niederhalter 28, geeignet sind, erfolgen.

Die Anordnung 14 weist weiter einen Schnittstellenbereich 46 zur Verbindung mit einer außerhalb des Niederhalters 26 ausgebildeten Sende- und/oder Empfangseinheit 48, 49 und/oder Auswerteeinheit 50 der Messeinrichtung 34 auf. Der Schnittstellenbereich 46 weist eine oder mehrere Schnittstellen, wie z.B. Steckverbindungen oder dergleichen auf. Zusätzlich oder alternativ kann der Schnittstellenbereich 46 Schnittstellen in Form von Öffnungen, Kanäle etc. aufweisen, die zur Führung der Leitungen aus dem Niederhalter 26 heraus dienen. Der Schnittstellenbereich 46 ist daher hier nicht näher dargestellt oder beschrieben.

Im Folgenden wird ein konkretes Ausführungsbeispiel anhand der Darstellungen in den Figuren erläutert, wobei die Messeinrichtung 34 eine optische Messeinrichtung ist und wobei die Stapelvorrichtung 12 zum Erzeugen von Batteriezellen durch Z-Falten - siehe hierzu näher [1] und [2] - ausgebildet ist. Konkrete Ausführungsbeispiele für die Stapelaufnahme 22, die Zellkomponentenzuführeinrichtung 24 und die Relativbewegungseinrichtung 30 sind z.B. für das Z-Falten aus den Literaturstellen [1] und [2] bekannt, so dass sie hier nicht näher beschrieben werden, sondern lediglich schematisch durch Pfeile dargestellt werden. Insbesondere weisen diese Einrichtungen NC-gesteuerte Achsen mit Aktoren auf, die sich dadurch auszeichnen, dass ihre jeweilige aktuelle Stellung einer Steuerung 52 der Stapelvorrichtung 12 bekannt ist.

Die Messeinrichtung 34 weist gemäß Fig. 6 eine Sendeeinheit 48 zum Senden des Sendesignals 36 über den Schnittstellenbereich 46 zu dem Messaufnehmer 32 und eine Empfangseinheit 49 zum Empfangen des Antwortsignals 38 über den Schnittstellenbereich 46 von dem Messaufnehmer auf. Die Sendeeinheit 48 ist bei der Ausführung von Fig. 6 beispielhaft eine optische Sendeeinheit zum Erzeugen und Aussenden von Licht und weist eine Lichtquelle 48.1 und z.B. eine Optik 48.2 auf. Die Empfangseinheit 49 weist ebenfalls eine Einrichtung 49.1 zum Umwandeln des als optisches Reflexionssignal ausgebildeten Antwortsignals 38 in ein elektrisches Signal, wie z.B. eine Kameraeinheit, CCD-Array, eine Photodiode, ein Intensitätssensor oder dergleichen auf.

Die Sendeeinheit 48, die Empfangseinheit 49 und die Auswerteeinheit 50 sind in einer externen Einheit 51 der Messeinrichtung außerhalb der Niederhalteeinrichtung 26 untergebracht, die über den jeweiligen Schnittstellenbereich 46 mit den einzelnen Anordnungen 14 (Kombination aus Niederhalter 28 mit Messaufnehmer 32) verbunden ist.

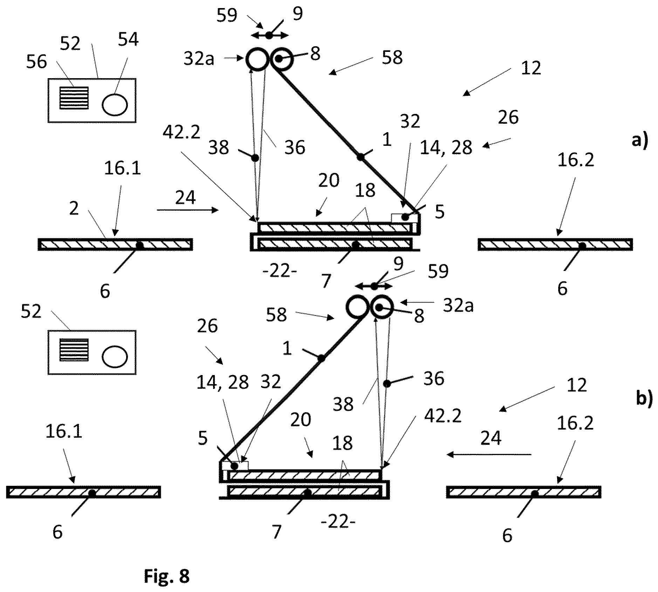

Gemäß Fig. 1 und 8, auf die nun Bezug genommen wird, weist die Stapelvorrichtung 12 die Steuerung 52 mit Prozessor 54 und Speicher 56 auf, in dem ein Computerprogramm mit Anweisungen zum Durchführen des Stapelprozesses und eines dabei durchzuführenden Messverfahrens zur Positionsbestimmung der Wiederholkomponenten 18 gespeichert ist. Auch die in Fig. 6 gezeigte Auswerteeinheit 50 der Messeinrichtung 34 ist mit einem Prozessor 54 und einem Speicher 56 mit entsprechenden Programmen ausgestattet. Die Auswerteeinheit 50 kann separat oder als Teil der Steuerung 52 ausgebildet sein. Wenn die Auswerteeinheit 50 separat ausgebildet ist, ist sie, wie dies in Fig. 6 dargestellt ist, mit der Steuerung 52 kommunikativ in Verbindung.

Mit der in den Fig. 1 bis 4 sowie 7 und 8 dargestellten Stapelvorrichtung 12 lassen sich Zellstacks für eine Batteriezelle durch Stapeln einzelner Elektroden oder Monozellen (Beispiel für Wiederholkomponenten 18) erstellen. Hierfür werden die Wiederholkomponenten 18 von ihrer Zuführposition 6 auf ihre Ablageposition 7 gebracht. Da die Ablageposition 7 ein Qualitätskriterium ist, wird diese mittels der Messeinrichtung 34 geprüft.

Mit der Stapelvorrichtung 12 gemäß dem dargestellten Ausführungsbeispiel wird das sogenannte Z-Falten durchgeführt. Es sind mehrere Zufuhrpositionen 6, beispielsweise zwei, jeweils eine für Anode (Beispiel für erste Zellkomponente 16.1, deren Zuführen ist in der Teildarstellung a) von Fig. 1 und 8 gezeigt) und Kathode (Beispiel für zweite Zellkomponente 16.2; deren Zuführen ist in der Teildarstellung b) von Fig. 1 und 8 gezeigt) vorhanden, die auf eine zentrale Ablageposition 7 ablegen. Die Ablageposition 7 ist mit einer beweglichen Einheit - Separatorbahnzufügeeinrichtung 58 - ausgestattet, welche die gezielte Ablage der Separator-Folie - im Folgenden auch einfach Separator 1 genannt - steuert, die zwischen Anode und Kathode eingebracht werden muss.

Die Separatorbahnzufügeeinrichtung 58 ist zum z-förmigen oder mäanderförmigen Einfügen einer Separatorbahn - Separator 1 - zwischen den Zellkomponenten 16.1, 16.2 derart eingerichtet, dass die Separatorbahn 1 wechselweise auf einer ersten Seite um eine vorhergehend platzierte Zellkomponente 16.1 umgeschlagen ist und dann auf einer der ersten Seite gegenüberliegenden zweiten Seite um eine nachfolgend platzierte Zellkomponente 16.2 umgeschlagen ist. Die Bewegung einer Verfahreinheit 8 der Separatorbahnzufügeeinrichtung 58 ist mit dem Bezugszeichen 9 angedeutet. Zum Durchführen dieser Bewegung ist eine weitere durch die Steuerung 52 NC-gesteuerten Relativbewegungseinrichtung 59 vorgesehen, von der Ausführungen beispielsweise aus [1] und [2] bekannt sind, und die daher hier nicht näher dargestellt ist. Die jeweilige Position der Verfahreinheit 8 der Separatorbahnzufügeeinrichtung 58 ist somit der Steuerung 52 genau bekannt.

Durch den Stapelprozess entstehen lose aufeinander abgelegte Schichten, allerdings ist eine Positionsgenauigkeit für funktionsfähige Zellen gefordert, daher werden die Anoden/Kathoden - Zellkomponenten 16.1, 16.2 - nach ihrer Ablage durch die beweglichen Niederhalter 28 in ihrer Position fixiert. Diese Niederhalter 28 weisen, da sie zwischen den einzelnen Schichten ausgefahren werden und auch als Umschlagkante für den Separator 1 dienen, eine angepasste Geometrie mit geringer Dicke (unter einem Millimeter) auf. Die Bewegung der Niederhalter 28 mittels der Relativbewegungseinrichtung 30 ist mit dem Bezugszeichen 10 bezeichnet. Durch die NC-Steuerung der Niederhalter 28 ist auch deren aktuelle Position der Steuerung 52 genau bekannt.

Die Ablageposition wird zusätzlich durch die Messeinrichtung 34 überprüft. Für die geforderten Toleranzen eigenen sich vor allem optische Messeinrichtungen 34.

Wie in Fig. 5 und 6 gezeigt ist bei der Messeinrichtung 34 ein Sensor - Messaufnehmer 32 - zur Kantenantastung, also Kantenerfassung, in den Niederhalter 28 eingebaut.

Der bei einigen Stapelprozessen ohnehin vorgesehene Schritt des Niederhaltens der Wiederholkomponenten 18 wird bei Ausführungsformen der Erfindung somit durch eine integrierte Messtechnik erweitert. Hierdurch entsteht eine platzsparende, effiziente Methode, um die Lage der Elektrodensheets zu bestimmen, welche unabhängig von Störkonturen und Formatwechseln ist.

Bei den dargestellten Ausführungen ist der Messaufnehmer 32 zum Aussenden von Licht auf einen Lichtpunkt 3 (Beispiel für Sendesignal 36) und zur Aufnahme von reflektiertem Licht (Beispiel für Antwortsignal 38) ausgebildet.

Gemäß der konkreten Ausführungsform gemäß Fig. 5 und 6 wird in den beispielsweise als Niederhaltefinger 5 ausgebildeten Niederhalter 28 ein Lichtwellenleiter 4 eingebaut. Dieser Lichtwellenleiter 4 kann eine Glasfaser, die das Licht aussendet, aufweisen. Das ausgesendete Licht - Sendesignal 36 - wird auf der Messoberfläche reflektiert und über die Intensität dieser Reflexion - Antwortsignal 38 - wird mittels der Auswerteeinheit 50 ein Abstandmaß ermittelt.

Je nach Konfiguration des Messaufnehmers 32 kann dabei das Sendesignal 36 und die Reflexion - das Antwortsignal 38 - von derselben Sensorleitung oder Faser 60 ausgesendet bzw. aufgenommen werden oder es kann jeweils eine Faser 60.1 (Beispiel für erste Sensorleitung) für Senden und eine Faser 60.2 (Beispiel für zweite Sensorleitung) für Empfangen vorgesehen sein. Wenn sich die optischen Eigenschaften der Messoberfläche ändern, verändert sich ebenfalls das empfangene Reflexionssignal.

Ein relativ zur Messoberfläche bewegter Messaufnehmer 32 verändert daher sein Signal, wenn:
- sich der Abstand zwischen Sender/Empfänger und Messoberfläche ändert oder
- sich die Reflexionseigenschaften des Messoberfläche ändern (bspw. anderes Material, andere Oberflächenbeschaffenheit, andere Farbe der Oberfläche).

Am Übergang zwischen Separator 1 und Aktivmaterial 2 ist mindestens eines dieser Merkmale zutreffend.

Allgemein können somit unterschiedliche Grenzlinienausbildungen 40 wie innere und äußere Kanten, Ecken, Dickenänderungen und Materialänderungen erfasst werden.

Bevorzugte Ausführungsformen der Anordnung 14 sowie der damit versehenen Messeinrichtung 34 erfüllen die folgenden Anforderungen:
- im Wesentlichen unabhängig von Störkonturen
- im Wesentlichen unabhängig von ungewollten Reflexionen, insbesondere durch die Umgebung, z.B. Reflexionen auf der Separatoroberfläche und/oder durch Wellen- oder Faltenschlag des Separators 1
- im Wesentlichen unabhängig gegenüber eines Formatwechsels
- Geringes Gewicht (wenige Gramm) - ermöglicht, eine hohe Taktzeit zu realisieren (z.B. etwa 0,3 Sekunden von Aufzeichnung des Signals bis zum Ergebnis (= Bestimmung der Position der Kante))
- Im Wesentlichen keine Anpassung der äußeren Geometrie des Niederhalters 28
- Kostengünstig

Wenngleich auch andere Messmethoden wie kapazitive Messungen grundsätzlich möglich sind, wird der Messaufnehmer 32 bei besonders bevorzugten Ausführungsformen mit wenigstens einem oder mehreren Lichtwellenleitern 4 (Beispiel für Sensorleitung) realisiert. Dies bietet folgende Vorteile:
- Flexible Lichtführung durch Glasfaser und damit an Geometrie des Niederhalters 28 anpassbar
- Geringes Gewicht der Faser 60.1, 60.2
- Geringe Arbeitsabstände (wenige Millimeter)
- Schnelle Schaltzeiten im Bereich weniger ~µs
- In kleinen Durchmessern von bis zu ø 0,5 mm erhältlich
- Hohe Wiederholgenauigkeit
- Kostengünstig, da Standardkomponente
- Unabhängig von Umgebungslicht durch codiertes Signal
- Auswerteeinheit 50 ist extern vorgesehen

Im Folgenden werden bevorzugte Ausführungen des Einbaus des Lichtwellenleiters 4 in den Niederhaltefinger 5 näher erläutert. Wenn die Sender/Empfänger-Konfiguration gewählt wird, kann jeweils eine Faser 60.1, 60.2 an der Außenkontur des Niederhalters 28 geführt werden. Dabei besitzt die Glasfaser einen Mindestbiegeradius und -winkel, die beim Integrieren in den Niederhaltefinger 5 zu beachten ist. Im besten Fall ist eine orthogonale Ausstrahlung auf die Messoberfläche möglich; wenn diese nicht möglich ist, besteht die Möglichkeit der Ausstrahlung unter einem Winkel.

Die Glasfaser wird bei einigen Ausführungen während der Montage in den Niederhaltefinger 5 eingeklebt. Bei einigen Ausführungen wird die Faser von insbesondere blickdichtem Material, z.B. von einem Material des Niederhalters 28, ummantelt, um Störeinflüsse zu reduzieren. Ebenfalls ist eine Konfiguration mit nur einer Faser denkbar.

Im Folgenden werden anhand der Darstellung der Fig. 1 bis 5 Ausführungsformen des Stapel- und Messverfahrens näher erläutert.

Fig. 1 zeigt in den Teilansichten a) und b) Alternativpositionen des Stapelprozesses. Beispielsweise werden in der oben gezeigten Position a) Zellkomponenten 16.1, die auch als Elektroden 16.1 bezeichnet werden können, vom linken Stapel - Zuführposition 6 - auf die Stapelposition - Ablageposition 7 - gebracht (Greifer nicht gezeichnet). In der Ablageposition 7 fahren die Niederhaltefinger 5 mit integrierter Sensorik - d.h., die Anordnung 14 - in einer Bewegungsrichtung 10 - jeweils nur die zwei am Umlenkpunkt des Separators 1 - ein. Durch den beim Einfahren der Niederhaltefinger 5 durch die Sensorik durchgeführten Messvorgang wird die Lage der Elektrode 16.1 zum Separator 1 oder zur Mitte des Stapels 20 ermittelt. Die Verfahreinheit 8 des Separators 1 bewegt sich in die zweite Alternativposition (Bild b)). Im Anschluss werden hier beispielhaft die vorherigen Niederhaltefinger 5 angehoben bzw. aus der Umschlagposition zurückgezogen. Die Zellkomponenten 16.2, die auch als Elektroden 16.2 bezeichnet werden können, werden von rechts zugeführt, und die Niederhaltefinger 5 am neuen/anderen Umschlagpunkt des Separators 1 werden eingefahren. Bezüglich der Niederhaltefinger 5 ist es jedoch auch möglich, dass diese nicht sofort aus der Umschlagposition zurückgezogen bzw. angehoben werden, sondern länger dort verweilen, z.B. bis kurz bevor der Separator 1 wieder auf derselben Seite, auf der die Niederhaltefinger 5 positioniert sind, umgeschlagen wird.

Fig. 2 zeigt die Draufsicht des Stapelprozesses mit den Bewegungsrichtungen 10 der Niederhaltefinger 5 und der Bewegungsrichtung 9 der Verfahreinheit 8 der Separatorzufügeeinrichtung 58.

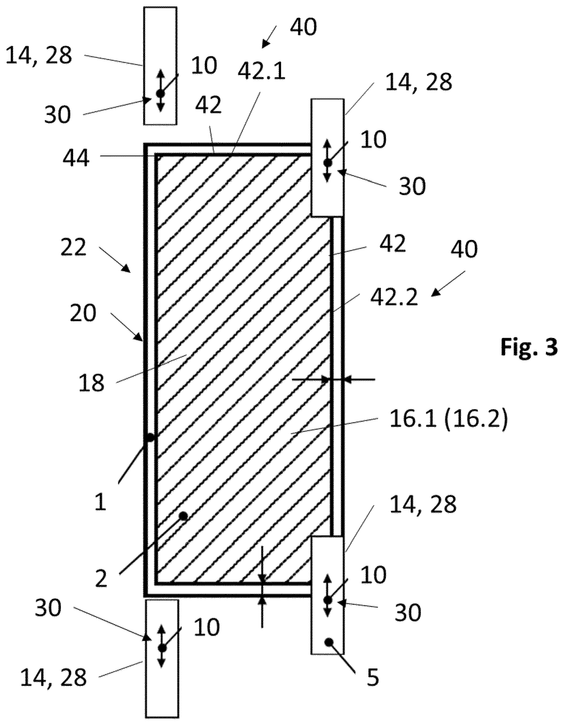

Fig. 3 zeigt die beispielhafte Bestimmung der Ablageposition der Elektrode 16.1, 16.2 mit Aktivmaterial 2. Dies kann wahlweise durch die Lage der Elektrode 16.1, 16.2 zum Separator 1, durch eine referenzierte NC-Achse im Niederhaltefinger 5 oder durch eine Verrechnung der Kanten 42.1, 42.2 zur Stapelmitte ermittelt werden.

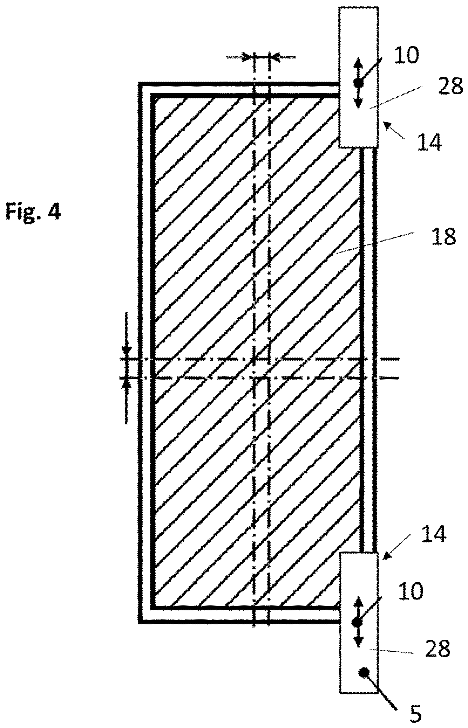

Ein Beispiel für die Verrechnung zur Stapelmitte ist in Fig. 4 gezeigt. Bei der Verrechnung zur Stapelmitte werden die NC-Achsen der Niederhaltefinger 5 zueinander referenziert. Beispielsweise kann ein Nullpunkt in die theoretische Stapelmitte gelegt werden, und die Achsen können physisch abgesteckt werden, und dieser abgesteckte Wert - Distanz zwischen Absteckpunkt und Stapelmitte - kann auf die Achse übertragen werden. Hiermit können direkte Längenwerte des Kantenabstands zur Mitte ermittelt werden. Bei bekannter Länge/Breite der Elektrode kann die Lage des Elektrodenmittelpunktes zur Stapelmitte berechnet werden.

Im Folgenden wird die Erfassung einer Grenzlinienausbildung 40 am Beispiel der Ermittlung einer sich quer zur Bewegungsrichtung 10 der Niederhalter 28 erstreckenden Kante 42.1 anhand der Darstellung in der Fig. 5 erläutert.

Ein Ausführungsbeispiel für den Messvorgang stellt wie folgt dar:
- Der Lichtwellenleiter 4 befindet sich im Dauerbetrieb;
- Ein Signal zum Einfahren der Niederhalter 28 startet die Messung;
- Der Übergang zwischen Separator 1 und (Aktivmaterial 2 der) Elektrode 16.1, 16.2 erzeugt ein Signal;
- Die NC-Achsposition/der Weg, den der Niederhalter 28 zu diesem Zeitpunkt zurückgelegt hat, wird aufgezeichnet:
- Die Position der Kante 42, 42.1 wird ermittelt.

Fig. 5 zeigt den Niederhaltefinger 5 beim Messvorgang (eingefahrener Zustand). Die Bewegungsrichtung 10 ist hierbei entlang der Längsachse des Niederhaltefingers 5. Dabei bewegt sich der von der Sensorik erzeugte und ausgegebene Messpunkt 3 von der Oberfläche des Separators 1 über die Elektrode 16.1, 16.2, wie z.B. insbesondere über das Aktivmaterial 2 der Elektrode 16.1, 16.2. Der Signalweg ist durch die Pfeile - Lichtwellenleiter 4, Sendesignal 36, Antwortsignal 38 - gezeigt. Wenn ein Kontrastunterschied, wie z.B. beim Übergang von der hellen Separator-Folie zur dunklen oder zumindest dunkleren Elektrode, entsteht, wird ein Sensorsignal ausgelöst und beispielsweise der Achswert geloggt, also die Position, an dem der Kontrastunterschied erfasst wurde, wird gespeichert. Eine Bestimmung der Kante 42 ist mit diesem Aufbau nur in Niederhalter-Bewegungsrichtung 10 möglich.

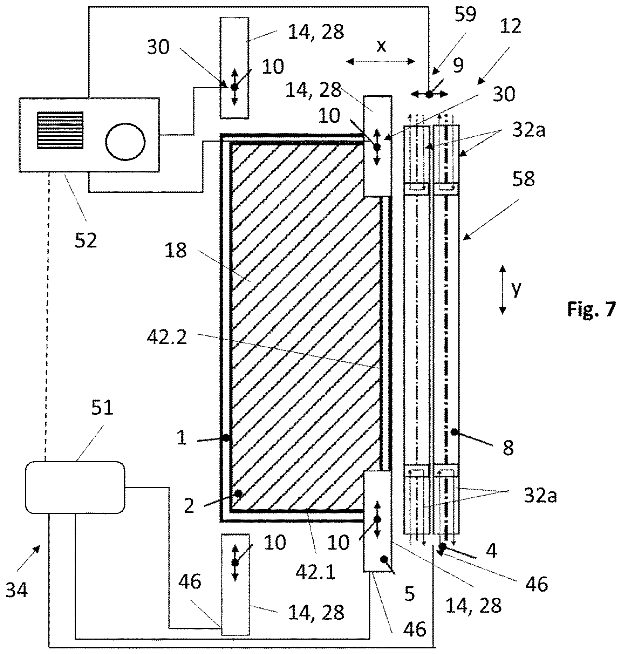

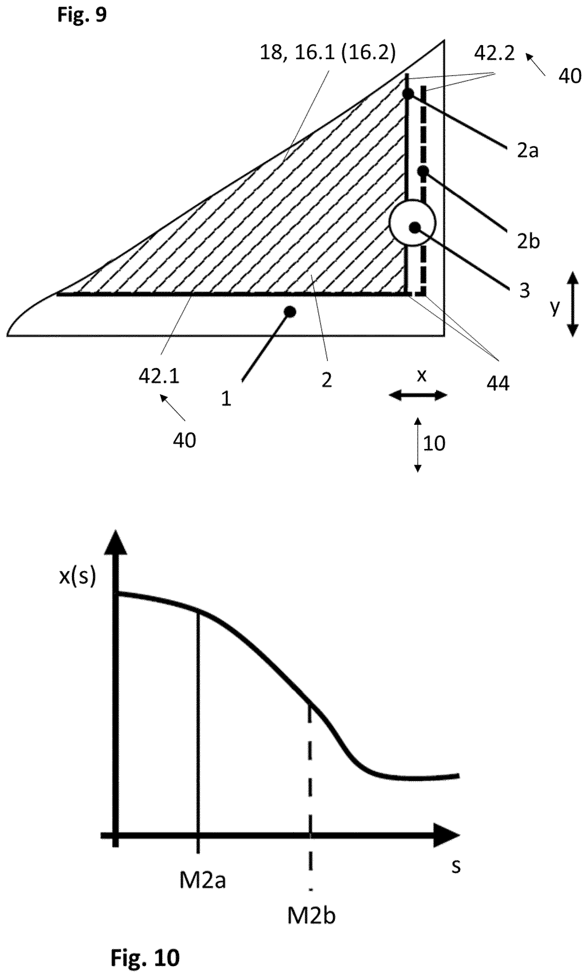

Mit einem Sender/Empfänger kann nur ein Punkt der Kante 42, 42.1 ermittelt werden und da der Niederhalter 28 nur in einer Achse - z.B. y-Achse - beweglich ist, kann nur eine Position der Wiederholkomponente 18, also z.B. die Position in der y-Achse, erfasst werden. Für eine vollständige Positionsermittlung ist ebenfalls die 90°-gedrehte Kante 42.2 zu erfassen. Hierfür gibt es bei Ausführungsformen der Erfindung mehrere Lösungsansätze:
1. mittels einem weiterem Messaufnehmer 32a, beispielsweise in Form eines Lichtwellenleiters, in der Verfahreinheit 8 des Separators 1 - d.h. der Verfahreinheit 8 der Separatorbahnzufügeeinrichtung 58 (siehe Fig. 7).
2. der Messaufnehmer 32 - beispielsweise ausgebildet als Lichtwellenleiter 4 - gibt ein Signal proportional zu der Überdeckung der an die Grenzlinienausbildung angrenzenden Oberfläche aus (siehe Fig. 9 und 10).

Generell ist es auch denkbar, auch die Position der erste Kante 42.1 mittels der sogenannten Überdeckungsmessung zu ermitteln. Dabei kann zum einen der Niederhaltefinger 5 im Bereich der erwarteten Position für die erste Kante 42.1 in seiner Bewegung gestoppt oder zum anderen die Lage des Messaufnehmer 32 im Niederhaltefinger 5 so angepasst werden, dass bei volleingefahren Zustand des Niederhaltefingers 5 der Messfleck immer über der Kante liegt. Der Messaufnehmer 32 gibt dann ein Signal proportional zu der Überdeckung der an die Grenzlinienausbildung angrenzenden Oberfläche für die Kante 42.1 aus.

Im Folgenden werden anhand der Darstellung der Fig. 7 und 8 Ausführungsformen der Stapelvorrichtung 12, der Messeinrichtung 34 und des Messverfahrens erläutert, bei denen eine weitere Kante 42.2, welche sich im Wesentlichen in Bewegungsrichtung 10 der Niederhalter 28 erstreckt, mittels eines weiteren Messaufnehmers 32a erfasst wird, der in einer Einheit 8 vorgesehen ist, die sich im bestimmungsgemäßen Gebrauch mit wenigstens einer Richtungskomponente quer zu der Niederhalterbewegungsrichtung 10 bewegt.

Die Fig. 7 und 8 zeigen die Positionsbestimmung in der anderen Achse - hier z.B. die x-Achse - durch einen weiteren Messaufnehmer 32a in der Verfahreinheit 8 in Draufsicht sowie in Vorderansicht bei unterschiedlichen Stellungen a) und b) der Stapelvorrichtung 12.

Die Verfahreinheit 8 bewegt sich in der Achse - x-Achse - quer zu der zweiten Kante 42.2. Durch eine Unterbrechung der Umlenkrollen der Verfahreinheit 8 kann in deren Achse ein Lichtwellenleiter eingebracht werden, welcher orthogonal auf die Oberfläche von Separator 1 und Elektrodensheet 2 schaut. Beim Ändern der Position der Verfahreinheit 8 kann die Position ermittelt werden und der Achswert der NC-Achse der Verfahreinheit 8 notiert werden.

Zur Bestimmung der quer zur Bewegungsrichtung 9 der Verfahreinheit 8 liegenden Kante 42.2 kann demnach eine Sensorik - weiterer Messaufnehmer 32a, z.B. weiterer Lichtwellenleiter 4 - in der Verfahreinheit 8 vorgesehen sein. Bei der Überfahrt wird ein Messsignal ausgelöst. Die Lage der ersten Kante 42.1 senkrecht zur Bewegungsrichtung 10 des Niederhaltefingers 5 wird dadurch bestimmt, dass die Messeinrichtung 34 die erste Kante 42.1 über das Messignal beim Einfahren des Niederhaltefingers 5 durch die Kontraständerung (von der hellen Separatorfolie zur dunkleren Elektrode) mittels des Messaufnehmers 32 in dem Niederhalter 28 bestimmt. Die Lage der zweiten Kante 42.2 senkrecht zur Bewegungsrichtung 9 der Verfahreinheit 8 wird während der Überfahrt der Verfahreinheit 8 von einer (ersten) Position auf einer Seite des zu bildenden Stapels 20 - gezeigt bei Fig. 8 a) - zur anderen (zweiten) Position auf der anderen Seite des zu bildenden Stapels 20 - gezeigt bei Fig. 8 b), ebenfalls anhand der Erkennung einer Kontraständerung, bestimmt (siehe auch Fig. 2). Hierbei kann beispielsweise der vorliegende Achswert der Verfahreinheit 8 bei der Signalauslösung gespeichert werden.

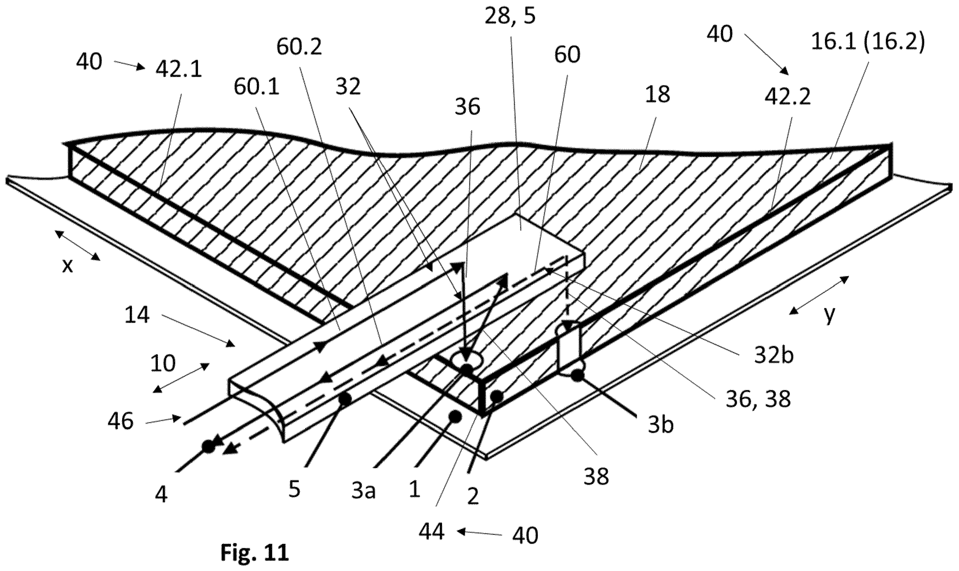

Im Folgenden werden anhand der Darstellung der Fig. 9, 10 und 11 Ausführungsformen der Stapelvorrichtung 12, der Messeinrichtung 34 und des Messverfahrens erläutert, bei denen eine weitere Kante 42.2, welche sich im Wesentlichen in Bewegungsrichtung 10 der Niederhalter 28 (siehe Fig. 11) erstreckt, mittels eines Signals ermittelt wird, welches proportional zur Überdeckung mit einer an die zu erfassende Grenzlinie - beispielsweise zweite Kante 42.2 - angrenzenden Oberfläche ist.

Die Fig. 9 zeigt in Draufsicht die alternative Möglichkeit zur Positionsbestimmung in der anderen Achse - z.B. x-Achse -, durch Überdeckung des Messbeleuchtungsflecks 3, 3b beispielsweise mittels eines zweiten Messaufnehmers 32b im Niederhalter 28 (siehe Fig. 11). Fig. 10 zeigt in Form eines Graphs eine Beziehung zwischen dem Grad der Überdeckung s und dem Signal x(s), wobei Messungen M2a und M2b den in Fig. 9 gezeigten beispielhaften möglichen Lagen 2a und 2b der Kante 42.2 entsprechen.

Das Prinzip der Überdeckungsmessung wird dann verwendet, wenn ein Verfahren des Messpunktes 3 derart, dass der Messpunkt 3 die zu messende Kante 42.2 kreuzt, nicht möglich ist, beispielsweise weil die zu messende zweite Kante 42.2 parallel zur y-Richtung liegt, was auch die Bewegungsrichtung 10 des Niederhaltefingers 5 ist. Eine Ermittlung der Kantenposition kann dennoch über den Überdeckungsgrad des Messpunktes 3 stattfinden. Abhängig davon, wie sehr die Elektrode, wie mit den beispielhaften Linien 2a oder 2b für mögliche Lagen der Kante 42.2 angedeutet, den Messpunkt 3, 3b überdeckt, wird ein Signal ausgelesen. Aus diesem Signal kann der Überdeckungsgrad ermittelt und damit eine Position abgeleitet werden, falls die Kurve wie in Fig. 10 dargestellt bekannt ist.

Fig. 11 zeigt ein weiteres Ausführungsbeispiel der Anordnung 14, wobei in dem Niederhalter 28 ein erster Messaufnehmer 32 zur Erfassung der quer zur Niederhalterbewegungsrichtung 10 liegenden ersten Kante 42.1 und ein zweiter Messaufnehmer 32b eingebaut ist, der zur Erfassung der in Richtung der Niederhalterbewegungsrichtung 10 verlaufenden zweiten Kante 42.2 durch Ermittlung des Grads der Überdeckung des Messpunkts 3b und des Aktivmaterials 2 der Elektrode 16.1, 16.2 (Wiederholkomponente 18) dient. Der zweite Messaufnehmer 32b ist hier in der beispielhaften Konfiguration mit nur einer Faser 60 für das Senden und Empfangen gezeigt, kann natürlich aber auch die Konfiguration mit zwei Fasern 60.1, 60.2 haben.

Wie in Fig. 11 gezeigt, gibt es die Möglichkeit, die Messung beider Kantenpositionen in den Niederhaltefinger 5 zu intergieren.

Die Lage der ersten Kante 42.1 senkrecht der Längsachse des Niederhaltefingers 5 wird dadurch bestimmt, dass die Messeinrichtung 34 die erste Kante 42.1 über das Messignal 3a und den Signalweg 4 beim Einfahren des Niederhalters 5 durch die Kontraständerung (von der hellen Separator-Folie zur dunkleren Elektrode) bestimmt.

Die Lage der zweiten Kante 42.2 in Richtung der Längsachse wird über den zweiten Messpunkt 3b ermittelt, der eine Überdeckungsmessung durchführt.

Es wird demnach ein zusätzlicher Messaufnehmer 32b in den Niederhaltefinger 5 eingebaut. Dieser wird so positioniert, dass dessen Reflexionspunkt 3b in einer Region liegt, in der die zweite Kante 42.2, insbesondere Elektrodenkante, zu erwarten ist (auch als "zu erwartende Region" bezeichnet). Die Messeinrichtung 34 mit den Messaufnehmern 32, 32b arbeitet wiederholgenau. Es lässt sich somit durch einfache Versuche die in Fig. 10 gezeigte Kurve, die die Beziehung zwischen Signal x(s) und Überdeckungsgrad s angibt, ermitteln. Die Überdeckung s gibt, wie anhand von 2a und 2b in Fig. 9 gezeigt, die Lage der zweiten Kante 42.2 in x-Richtung an.

Je nach Überdeckungsgrad des Reflexionspunkts 3b mit der Elektrodenoberfläche - Oberfläche des Aktivmaterials 2 im Kantenbereich - wird ein Signal ausgegeben. Dieses Signal folgt der gewissen Kurve x(s) abhängig vom Überdeckungsgrad s. Durch die Ermittlung des Signals kann also eine Position relativ zum Reflexionspunkt ermittelt werden.

Die Wirkweise der Messeinrichtung 34 ist anhand der Funktion einer der Anordnungen 14 mit einem Messaufnehmer 32, der in einen der Niederhalter 28 integriert ist, beschrieben worden. Wie oben anhand von Fig. 1 bis 4 dargestellt, weisen Ausführungsformen der Stapelvorrichtung 24 mehrere Niederhalter 28, z.B. jeweils zwei auf jeder Seite, auf. Bei bevorzugten Ausführungsformen weisen mehrere, insbesondere alle dieser Niederhalter 28 einen integrierten Messaufnehmer 32 auf. Dadurch lässt sich, wie oben anhand von Fig. 4 erläutert, die Lage aller Kanten der Wiederholkomponenten in y-Richtung und in x-Richtung ermitteln.

Beispielsweise sind, wie in Fig. 2 und 3 dargestellt, vier Niederhaltefinger 5 verbaut (in Fig. 4 sind nur zwei der vier Niederhaltefinger 5 gezeigt), die gegenüberliegenden zwei sind dabei gleichzeitig im Einsatz. Werden somit mit den jeweils gegenüberliegenden Niederhaltern 28 die Position der gegenüberliegenden Ecken 44 bestimmt, lässt sich neben der Lage der Wiederholkomponente 18 durch Kombination aus den Signalen auch die Gesamtlänge der Wiederholkomponente 18 bestimmen.

Zur Qualitätsverbesserung bei geringerem apparativem Aufwand bei einer Stapelbildung aus Wiederholkomponenten 18 im Rahmen der Herstellung von elektrischen Energiequellen ist eine (Mess-)Anordnung 14 mit einem Messaufnehmer 32, 32b für eine Messeinrichtung 34 zum Messen einer Position einer Wiederholkomponente 18 für die Erzeugung von Zellen einer elektrischen Energiequelle vorgeschlagen worden, wobei die Anordnung 14
einen flächig ausgebildeten Niederhalter 28 zum Niederhalten der Wiederholkomponente 18 aufweist, in dem der Messaufnehmer 32, 32b angeordnet ist,
zum Senden eines Sendesignals 36 auf die Wiederholkomponente 18 und zum Empfangen eines Antwortsignals 38 ausgebildet ist, und
einen Schnittstellenbereich 46 zur Verbindung mit einer außerhalb des Niederhalters 28 ausgebildeten Sende- und/oder Empfangseinheit 48, 49 und/oder Auswerteeinheit 50 der Messeinrichtung 34 aufweist.

### Bezugszeichenliste:

- 1: Separator
- 2: Aktivmaterial
- 3, 3a, 3b: Lichtpunkt der Messeinrichtung
- 4: Lichtwellenleiter/Strahlengang
- 5: Niederhaltefinger
- 6: Zufuhrposition
- 7: Ablageposition
- 8: Verfahreinheit
- 9: Bewegungsrichtung Verfahreinheit Separator
- 10: Bewegungsrichtung Niederhalterfinger
- 12: Stapelvorrichtung
- 14: (Mess-)Anordnung
- 16.1: erste Zellkomponente / Elektrode (z.B. Anode/Anodensheet)
- 16.2: zweite Zellkomponente / Elektrode (z.B. Kathode/Kathodensheet)
- 18: Wiederholkomponente
- 20: Stapel
- 22: Stapelaufnahme
- 24: Zellkomponentenzuführeinrichtung
- 26: Niederhalteeinrichtung
- 28: Niederhalter
- 30: Relativbewegungseinrichtung
- 32: Messaufnehmer
- 32a: weiterer Messaufnehmer (in Einheit 8)
- 32b: zweiter Messaufnehmer (in Anordnung 14)
- 34: Messeinrichtung
- 36: Sendesignal
- 38: Antwortsignal
- 40: Grenzlinienausbildung
- 42, 42.1, 42.2: Kante
- 44: Ecke
- 46: Schnittstellenbereich
- 48: Sendeeinheit
- 48.1: Lichtquelle
- 48.2: Optik
- 49: Empfangseinheit
- 49.1: Einrichtung zum Umwandeln von Licht in elektrisches Signal
- 50: Auswerteeinheit
- 51: externe Einheit
- 52: Steuerung
- 54: Prozessor
- 56: Speicher
- 58: Separatorbahnzufügeeinrichtung
- 59: weitere Relativbewegungseinrichtung
- 60: Faser (Senden und Empfangen/Beispiel für Sensorleitung)
- 60.1: Faser (Senden/Beispiel für erste Sensorleitung)
- 60.2: Faser (Empfangen/Beispiel für zweite Sensorleitung)

## Patentansprüche

1. Anordnung (14) mit einem Messaufnehmer (32, 32b) für eine Messeinrichtung (34) zum Messen einer Position einer Wiederholkomponente (18) für die Erzeugung von Zellen einer elektrischen Energiequelle,
**dadurch gekennzeichnet,**
**dass** die Anordnung (14) einen flächig ausgebildeten Niederhalter (28) zum Niederhalten der Wiederholkomponente (18) aufweist, in dem der Messaufnehmer (32, 32b) angeordnet ist,
zum Senden eines Sendesignals (36) auf die Wiederholkomponente (18) und zum Empfangen eines Antwortsignals (38) ausgebildet ist, und
einen Schnittstellenbereich (46) zur Verbindung mit einer außerhalb des Niederhalters (28) ausgebildeten Sende- und/oder Empfangseinheit (48, 49) und/oder Auswerteeinheit (50) der Messeinrichtung (34) aufweist.

2. Anordnung (14) nach Anspruch 1, **dadurch gekennzeichnet, dass** der Messaufnehmer (32, 32b) als Messaufnehmer für eine optische Messeinrichtung (34) zum optischen Messen der Position einer Wiederholkomponente (18) ausgebildet ist, wobei der Messaufnehmer (32, 32b) zum Senden eines optischen Sendesignals (36) auf die Wiederholkomponente (18) und zum Empfangen eines aufgrund des optischen Sendesignals (36) als optisches Reflexionssignal ausgebildeten Antwortsignals (38) ausgebildet ist.

3. Anordnung (14) nach Anspruch 1 oder 2, **dadurch gekennzeichnet,**
**dass** der Messaufnehmer (32, 32b)
3.1 in den als Niederhaltefinger (5) ausgebildeten Niederhalter (28) eingebaut und/oder integriert ist;
3.2 eine Dicke aufweist, die gleich oder kleiner als eine Dicke des Niederhalters (28) ist; und/oder
3.3 in oder an einem Bereich des Niederhalters (28) angeordnet ist, dessen Dicke zwischen 1,5 mm und 0,3 mm, insbesondere weniger als 1,0 mm und mehr als 0,3 mm, weiter insbesondere 0,8 mm, beträgt; und/oder
3.4 zusammen mit dem Niederhalter (28) mittels einer Relativbewegungseinrichtung (30) relativ zu der zu messenden Wiederholkomponente (18), insbesondere linear in einer Niederhalterbewegungsrichtung (10), bewegbar ist;
3.5 wenigstens eine Sensorleitung (60) zum Leiten des Sendesignals (36) und/oder Antwortsignals (38) aufweist; und/oder
3.6 eine erste Sensorleitung (60.1) zum Leiten des Sendesignals (36) und eine zweite Sensorleitung (60.2) zum Leiten des Antwortsignals aufweist.

4. Anordnung (14) nach einem der voranstehenden Ansprüche, **dadurch gekennzeichnet, dass** der wenigstens eine Messaufnehmer (32, 32b) als ein optischer oder als ein kapazitiver Messaufnehmer ausgebildet ist.

5. Anordnung (14) nach Anspruch 4, **dadurch gekennzeichnet,**
**dass** der wenigstens eine optische Messaufnehmer (32, 32b) einen Lichtwellenleiter (4) aufweist oder als ein Lichtwellenleiter (4) ausgebildet ist, wobei der Lichtwellenleiter (4)
5.1 in den Niederhalter (28) eingebaut ist; und/oder
5.2 eine Faser (60), insbesondere Glasfaser, aufweist, die zum Aussenden des Sendesignals (36) und zur Aufnahme des Antwortsignals (38) ausgebildet ist; und/oder
5.3 eine erste Faser (60.1) zum Leiten des Sendesignals (36) aufweist; und/oder
5.4 eine zweite Faser (60.2) zum Leiten des Reflexionssignals (38) aufweist.

6. Anordnung (14) nach Anspruch 5, **dadurch gekennzeichnet**,
6.1 dass die erste Faser (60.1) an einer ersten Außenkontur des Niederhalters (28) entlang einer ersten Längskante geführt ist und die zweite Faser (60.2) an einer zweiten Außenkontur des Niederhalters (28) entlang einer zweiten Längskante geführt ist; und/oder
6.2 dass die zumindest eine Faser (60, 60.1, 60.2) mittig, insbesondere entlang einer Längsachse des Niederhalters (28), angeordnet ist; und/oder
6.3 die jeweilige Faser (60, 60.1, 60.2) mit einem derartigen Verlauf und einer derartigen Krümmung in dem Niederhalter (28) eingebaut ist, dass ein Aussenden und/oder ein Empfangen orthogonal oder unter einem schrägen Winkel zur Oberfläche der Wiederholkomponente (18) und/oder zur zum Auflegen auf die Wiederholkomponente (18) bestimmten Erfassungsoberfläche des Niederhalters (28) ermöglicht ist; und/oder
6.4 dass die jeweilige Faser (60, 60.1, 60.2) in den Niederhalter (28) eingeklebt ist; und/oder
6.5 dass die jeweilige Faser (60, 60.1, 60.2) von blickdichtem Material und/oder dem Material des Niederhalters (28) ummantelt oder umgeben ist.

7. Messeinrichtung (34) zum Messen einer Position einer Wiederholkomponente (18) für die Erzeugung von Zellen einer elektrischen Energiequelle, **gekennzeichnet durch** wenigstens eine Anordnung (14) nach einem der voranstehenden Ansprüche, eine Sendeeinheit (48) zum Senden des Sendesignals (36) über den wenigstens einen Schnittstellenbereich (46) und eine Empfangseinheit (49) zum Empfangen des Antwortsignals (38) über den wenigstens einen Schnittstellenbereich (46) und eine Auswerteeinheit (50), die dazu ausgebildet ist, die Position einer Grenzlinienausbildung (40) der zu messenden Wiederholkomponente (18)
7.1 aus dem Antwortsignal (38) sowie einem Messaufnehmerpositionssignal, welches eine Position des in dem Niederhalter (28) vorgesehenen Messaufnehmers (32) angibt, und/oder
7.2 aus einem Vergleich von wenigstens zwei Antwortsignalen (38), die an Stellen (2a, 2b) aufgenommen worden sind, die in Erstreckungsrichtung der Kante gesehen einen unterschiedlichen Abstand zu einer vorbestimmten Referenzposition der zu messenden Wiederholkomponente (18) haben, und/oder
7.3 aus einem Vergleich des Antwortsignals (38) mit einer vorbestimmten Kurve, die ein Verhältnis des Antwortsignals (38) zu einem Grad einer Überdeckung einer an die Grenzlinienausbildung angrenzenden Fläche mit einem Messbereich (3b) angibt, in den das Sendesignal (36) eingeleitet wird,
zu ermitteln.

8. Messeinrichtung nach Anspruch 7, **dadurch gekennzeichnet**,
8.1 dass die Auswerteeinheit (50) dazu ausgebildet ist, als Grenzlinienausbildung (40) eine Linienausbildung aus der Gruppe zu ermitteln, die eine Kante (42, 42.1, 42.2) der Wiederholkomponente (18), eine Außenkante der Wiederholkomponente (18), eine an einem Materialübergang ausgebildete Kante der Wiederholkomponente (18), eine Kante einer Beschichtung der Wiederholkomponente (18), eine durch eine Dickenänderung der Wiederholkomponente (18) ausgebildete Linie, eine durch eine Materialänderung an der Wiederholkomponente (18) ausgebildete Linie, eine Ecke (44) der Wiederholkomponente (18), eine Außenecke der Wiederholkomponente, eine an einem Materialübergang ausgebildete Ecke der Wiederholkomponente (18), eine Ecke einer Beschichtung der Wiederholkomponente (18), eine durch eine Dickenänderung der Wiederholkomponente (18) ausgebildete Ecke und eine durch eine Materialänderung an der Wiederholkomponente (18) ausgebildete Ecke umfasst, und/oder
8.2 dass ein weiterer Messaufnehmer (32a) zum Messen der Position einer weiteren Grenzlinienausbildung (40) der Wiederholkomponente (18) an einer Einheit (8) vorgesehen ist, die sich im bestimmungsgemäßen Gebrauch mit wenigstens einer Richtungskomponente quer zu einer Niederhalterbewegungsrichtung (10) bewegt, mit der sich im bestimmungsgemäßen Gebrauch der Niederhalter (28) relativ zu der zu messenden Wiederholkomponente (18) bewegt, wobei die Auswerteeinheit (50) dazu eingerichtet ist, die Position einer ersten Grenzlinienausbildung (40, 42.1) beim Überfahren der ersten Grenzlinienausbildung (40, 42.1) in Niederhalterbewegungsrichtung (10) mittels des in dem Niederhalter (28) angeordneten Messaufnehmers (32) zu ermitteln und die Position der weiteren Grenzlinienausbildung (40, 42.2) aufgrund eines Signals des weiteren Messaufnehmers (32a) und eines Positionssignals der Einheit (8) zu ermitteln, und/oder
8.3 dass ein zweiter Messaufnehmer (32b) in dem Niederhalter (28) der Anordnung (14) nach einem der Ansprüche 1 bis 6 mit Abstand zu dem ersten Messaufnehmer (32) vorgesehen ist, wobei die Messeinrichtung (34) dazu eingerichtet ist, die Position einer ersten Grenzlinienausbildung (40, 42.1) beim Überfahren der ersten Grenzlinienausbildung (40, 42.1) mit dem ersten Messaufnehmer (32) zu ermitteln und die Position einer zweiten Grenzlinienausbildung (40, 42.2) der zu messenden Wiederholkomponente (18) mit dem zweiten Messaufnehmer (32b) aus einem Vergleich von an den unterschiedlich zu der vorbestimmten Referenzposition angeordneten Stellen (2a, 2b) entlang der zweiten Grenzlinienausbildung (40, 42.2) aufgenommenen Antwortsignale oder aus einem Vergleich des mit dem zweiten Messaufnehmer (32b) mit einer einen Überdeckungsgrad eines Messpunkts (3b) mit einer an die zweiten Grenzlinienausbildung (40, 42.2) angrenzenden Oberfläche der Wiederholkomponente (18) angebenden Kurve (x(s)) zu ermitteln; und/oder
8.4 dass die Messeinrichtung (34) eine optische Messeinrichtung zum optischen Messen der Position der Wiederholkomponente (18) ist oder eine kapazitive Messeinrichtung zum kapazitiven Messen der Position der Wiederholkomponente (18) ist; und/oder
8.5 dass die Messeinrichtung (34) dazu eingerichtet ist, mit mehreren der Messaufnehmer (32) eine Lage der Wiederholkomponente (18) zu erfassen; und/oder
8.6 dass die Messeinrichtung (34) mehrere der Messaufnehmer (32) an unterschiedlichen Stellen aufweist und dazu eingerichtet ist, durch Messung mithilfe der mehreren Messaufnehmer (32) Positionen von mehreren Punkten der Wiederholkomponente (18) und damit deren Lage zu erfassen.

9. Stapelvorrichtung (12) zum wechselweisen Stapeln einer ersten und zweiten Zellkomponente (16.1, 16.2) als Wiederholkomponenten (18) zu einem Stapel (20) für die Erzeugung von Zellen einer elektrischen Energiequelle, wobei die Stapelvorrichtung (12) eine Stapelaufnahme (22), eine Zellkomponentenzuführeinrichtung (24) zum Zuführen der ersten und zweiten Zellkomponente (16.1, 16.2) zu der Stapelaufnahme (22), um dort den Stapel (20) zu bilden, und eine Niederhalteeinrichtung (26) zum Niederhalten der Wiederholkomponenten (18) aufweist, wobei die Niederhalteeinrichtung (26) einen flächig ausgebildeten Niederhalter (28) zum Niederhalten einer auf dem Stapel (20) oder der Stapelaufnahme (22) abgelegten Wiederholkomponente (18) und eine Relativbewegungseinrichtung (30) zum relativen Bewegen des Niederhalters (28) und der Stapelaufnahme (22) aufweist, **dadurch gekennzeichnet,**
**dass** der Niederhalter (28) der Niederhalter (28) der Anordnung (14) nach einem der Ansprüche 1 bis 6 mit dem Messaufnehmer (32, 32b) ist und/oder dass die Stapelvorrichtung (12) eine Messeinrichtung (34) nach einem der Ansprüche 7 oder 8 aufweist.

10. Stapelvorrichtung (12) nach Anspruch 9, **dadurch gekennzeichnet**,
10.1 dass die Relativbewegungseinrichtung (30) zum relativen Bewegen des Niederhalters (28) zu der Stapelaufnahme (22) in einer sich quer zu einer ersten Grenzlinie (42.1) der abgelegten Wiederholkomponente (18) verlaufenden Niederhalterbewegungsrichtung (10) ausgebildet ist, und/oder
10.2 dass eine Separatorbahnzufügeeinrichtung (58) zum z-förmigen oder mäanderförmigen Einfügen einer Separatorbahn (1) zwischen den Zellkomponenten (16.1, 16.2) derart vorgesehen ist, dass die Separatorbahn (1) wechselweise auf einer ersten Seite um eine vorhergehend platzierte Zellkomponente (16.1) umgeschlagen ist und dann auf einer der ersten Seite gegenüberliegenden zweiten Seite um eine nachfolgend platzierte Zellkomponente (16.2) umgeschlagen ist.

11. Stapelvorrichtung (12) nach Anspruch 10, **dadurch gekennzeichnet,**
**dass** die Separatorbahnzufügeeinrichtung (58) eine Verfahreinheit (8) und eine weitere Relativbewegungseinrichtung zum relativen Bewegen der Verfahreinheit (8) relativ zu der Stapelaufnahme (22) in einer Verfahreinheitbewegungsrichtung (9) aufweist, die quer zu der Niederhalterbewegungsrichtung (10) verläuft, wobei an der Verfahreinheit (8) ein weiterer Messaufnehmer (32a) zum Messen der Position einer weiteren Grenzlinie (42.2) der abgelegten Wiederholkomponente (18) vorgesehen ist.

12. Messverfahren zum Messen einer Position einer Wiederholkomponente (18) für die Erzeugung von Zellen einer elektrischen Energiequelle, umfassend:
a) Bereitstellen einer Anordnung (14) nach einem der Ansprüche 1 bis 6, einer Messeinrichtung (34) nach einem der Ansprüche 7 oder 8 oder einer Stapelvorrichtung (12) nach einem der Ansprüche 9 bis 11,
b) relatives Bewegen des mit dem Messaufnehmer (32, 32b) versehenen Niederhalters (28) und der Wiederholkomponente (18) in einer sich mit zumindest einer Richtungskomponente quer zu einer ersten Grenzlinie (42.1) der Wiederholkomponente (18) erstreckenden Niederhalterbewegungsrichtung (10);
c) Senden des Sendesignals (36) mittels des Messaufnehmers (32, 32b) während der Relativbewegung von Schritt b);
d) Empfangen eines Antwortsignals (38) mittels des Messaufnehmers (32, 32b) während der Relativbewegung von Schritt b); und
e) Bestimmen der Position einer die erste Grenzlinie (42.1) umfassenden ersten Grenzlinienausbildung (40) der Wiederholkomponente (18) mit den Schritten:
e1) Erfassen der Position des Niederhalters (28) in Niederhalterbewegungsrichtung (10) beim Erfassen einer Änderung des Antwortsignals (38); und
e2) Bestimmen der Position der ersten Grenzlinienausbildung (40, 42.1) aus der in Schritt e1) erfassten Position des Niederhalters (28)
und/oder
f) Bestimmen der Position einer sich quer zu der ersten Grenzlinie (32.1) erstreckenden zweiten Grenzlinie (42.2) der Wiederholkomponente (18) mit den Schritten:
f1) Durchführen von Schritt b) derart, dass ein Messpunkt (3b) des Messaufnehmers (32b) entlang einer Soll-Lage der zweiten Grenzlinie (42.2) verfahren wird; und
f2) Erfassen des Antwortsignals (38) an wenigstens zwei in unterschiedlichen Abständen zu einer vorbestimmten Referenzposition zwischen der ersten und zweiten Grenzlinie liegenden Stellen (2a, 2b) im Verlauf der Bewegung von Schritt f1) und Ermitteln der Ist-Lage der zweiten Grenzlinie (42.2) anhand eines durch Vergleich der Antwortsignale ermittelten Überdeckungsgrades, mit dem der Messpunkt (3b) die zweite Grenzlinie (42.2) überdeckt oder
f3) Erfassen des Antwortsignals (38) und Ermitteln der Ist-Lage der zweiten Grenzlinie (42.2) anhand eines Vergleichs des Antwortsignals (38) mit einer vorbestimmten Kurve (x(s)), die die Beziehung des Antwortsignals (38) zu einem Überdeckungsgrad angibt, mit dem der Messpunkt (3b) eine an die zweite Grenzlinie (42.2) anschließende Oberfläche der Wiederholkomponente (18) überdeckt.

13. Messverfahren nach Anspruch 12, in der Alternative mit Schritt e), **gekennzeichnet durch** den Schritt:
g) Bestimmen der Position der sich quer zu der ersten Grenzlinie (42.1) erstreckenden zweiten Grenzlinie (42.2) der zu messenden Wiederholkomponente (18) mit den Schritten:
g1) Vorsehen eines weiteren Messaufnehmers (32a) zur Grenzlinienabtastung an einer Einheit (8), die quer zur Niederhalterbewegungsrichtung (10) über die zu messende Wiederholkomponente (18) verfahren wird, und
g2) Erfassen der Position der zweiten Grenzlinie (42.2) aus einem eine Grenzlinienerfassung anzeigenden Messsignals des weiteren Messaufnehmers (32b) und einer zum Zeitpunkt der Grenzlinienerfassung erfassten Position der Einheit (8).

14. Messverfahren nach Anspruch 13, **dadurch gekennzeichnet,**
**dass** Schritt g1) den Schritt umfasst:
g1.1) Vorsehen des weiteren Messaufnehmers (32a) an einer Verfahreinheit (8) einer Separatorbahnzufügeeinrichtung (58) zum z-förmigen oder mäanderförmigen Einfügen einer Separatorbahn (1) zwischen den Wiederholkomponenten (18).

15. Messverfahren nach einem der Ansprüche 12 bis 14, **gekennzeichnet durch** wenigstens einen der Schritte:
15.1 Erfassen einer Lage der Wiederholkomponente (18) mit mehreren Messaufnehmern (32) oder mehreren der Anordnungen (14);
15.2 Bereitstellen mehrerer der Messaufnehmer (32) an unterschiedlichen Stellen und Erfassen von Positionen von mehreren voneinander beabstandeten vordefinierten Punkten oder Grenzlinien der Wiederholkomponente (18) **durch** Messung mithilfe der mehreren Messaufnehmer (32), um so die Lage der Wiederholkomponente (18) zu erfassen.

16. Messeinrichtung (34) nach einem der Ansprüche 7 oder 8 oder Stapelvorrichtung (12) nach einem der Ansprüche 9 bis 11, umfassend eine computerimplementierte Steuerung (52), die dazu eingerichtet ist, die Messeinrichtung (34) oder die Stapelvorrichtung (12) zum Durchführen des Messverfahrens nach einem der Ansprüche 12 bis 15 zu veranlassen.

17. Computerprogramm umfassend Anweisungen, die eine Messeinrichtung (34) nach einem der Ansprüche 7 oder 8 oder eine Stapelvorrichtung (12) nach einem der Ansprüche 9 bis 11 veranlassen, das Messverfahren nach einem der Ansprüche 12 bis 15 durchzuführen.
